# EUROPÄISCHE PATENTSCHRIFT

(11) **EP 3 007 884 B1**
(45) Veröffentlichungstag und Bekanntmachung des Hinweises auf die Patenterteilung: **21.11.2018**
(21) Anmeldenummer: 14741506.1
(22) Anmeldetag: 13.06.2014
(51) Int. Cl.: B29C 70/48, B29C 33/30, B29C 45/26, B29C 33/44, B60B 5/02

(54) **VORRICHTUNG ZUR HERSTELLUNG EINES BAUTEILS AUS FASERVERBUNDWERKSTOFF**
DEVICE FOR PRODUCING A COMPONENT FROM FIBRE COMPOSITE MATERIAL
DISPOSITIF DE PRODUCTION D'UNE PIÈCE CONSTITUÉE D'UN MATÉRIAU COMPOSITE RENFORCÉ DE FIBRES

(30) Priorität: 13.06.2013 DE 102013106196
(43) Veröffentlichungstag der Anmeldung: 20.04.2016
(73) Patentinhaber: ThyssenKrupp Carbon Components GmbH, 01723 Wilsdruff STT Kesselsdorf (DE)
(72) Erfinder: WERNER, Jens, 01640 Coswig (DE); KÖHLER, Christian, 01099 Dresden (DE); MÄKE, Sandro, 01796 Dohma (DE); DRESSLER, Michael, 01159 Dresden (DE); BARTSCH, André, 02747 Großhennersdorf (DE)
(86) Internationale Anmeldenummer: PCT/DE2014/100196
(87) Internationale Veröffentlichungsnummer: WO 2014/198263

(56) Entgegenhaltungen:
- CA-A1- 2 842 142
- DE-A1-102011 007 997
- FR-A1- 2 205 405
- KENDALL K N ET AL: "Characterization of the resin transfer moulding process", COMPOSITES MANUFACTURING, BUTTERWORTH SCIENTIFIC, GUILDFORD, SURREY, GB, Bd. 3, Nr. 4, 1. Januar 1992 (1992-01-01), Seiten 235-249, XP023627223, ISSN: 0956-7143, DOI: 10.1016/0956-7143(92)90111-7 [gefunden am 1992-01-01]

## Beschreibung

Die Erfindung betrifft eine Vorrichtung zur Herstellung eines Bauteils aus Faserverbundwerkstoff aus einem Faserhalbzeug mit einem mehrteiligem Form- und Infiltrations-Werkzeug mit Werkzeugteilen, deren formgebenden Funktionsoberflächen im geschlossenen Zustand des Werkzeuges eine für das Bauteil maßgebliche Kavität bilden.

In einem sogenannten "Resin Transfer Moulding" Verfahren (RTM-Verfahren)werden aus einem Faserhalbzeug komplexe Bauteile aus Faserverbundwerkstoff hergestellt.

Derart erzeugte Faserverbundbauteile finden in zahlreichen Branchen mit hohen Leichtbau-Anforderungen, wie dem Fahrzeugbau oder der Luft- und Raumfahrt-Industrie, Anwendung.

Bei dem Verfahren wird ein aus trockenen Fasermatten oder aus einer vorgeformten Preform bestehendes Faserhalbzeug in ein zweiteiliges, formgebendes, z.T. beheiztes Werkzeug eingelegt. Im geschlossenen Zustand des zweiteiligen Werkzeuges bilden die formgebenden Funktionsoberflächen der unteren und oberen Formhälfte des zweiteiligen Werkzeugs die Kavität bzw. die Form für das zu formende Faserverbundbauteil, wobei das Faserhalbzeug gegebenenfalls angeformt wird.

Die sich bildende Kavität ist ein Hohlraum, der die abschließende Formgebung des zu fertigenden Bauteils vorgibt.

Nach dem dichten Verschließen der beiden Werkzeugteile des zweiteiligen Werkzeuges ist das Faserhalbzeug gegenüber der Umgebung abgedichtet und es wird unter Druck, ein flüssiges Reaktionsharz in die, vorzugsweise evakuierte, Kavität injiziert. Das Harz füllt die Kavität aus und durchtränkt die Faserlagen des Faserhalbzeugs. Nach dem Aushärten des Harzes wird das Formwerkzeug geöffnet und das fertige Bauteil kann entnommen werden.

Eine übliche Werkzeugvorrichtung zum Herstellen eines flächigen Bauteils nach diesem Verfahren ist aus der Druckschrift CA 2 842 142 A1 bekannt. Das mehrteilige Formwerkzeug weist zur Formung und Infiltration eines Faserhalbzeugs drei formgebende Werkzeugteile (unteres, oberes Formteil, rahmenartiges Formteil) auf, die im geschlossenen Zustand des Formwerkzeugs das zu formende Faserhalbzeug vollständig umschließen und mittels Dichtungen das Formwerkzeug gegenüber der Umgebung abdichten.

Aus der Druckschrift FR 2 205 405 A1 ist eine analog gestaltete Werkzeugvorrichtung zum Herstellen eines flächigen Bauteils nach diesem Verfahren bekannt.

Bei den bekannten Werkzeugvorrichtungen zum Herstellen eines komplex geformten Bauteils nach diesem Verfahren, wie beispielsweise in der Druckschrift DE 10 2005 008 479 A1 beschrieben, tritt das Problem auf, dass komplexe Bauteile, welche in Bezug zur Entformungsrichtung der Werkzeughälften des zweiteiligen Formwerkzeuges hinterschneidende Konturbereiche aufweisen, nicht detailliert abgebildet werden können bzw. nicht beschädigungsfrei entformt werden können und daher nicht bzw. nur mit erheblichen Aufwand gefertigt werden können. Derart komplexe Bauteile kommen beispielsweise bei Radkonstruktionen vor.

Zwar können im Bereich der Entformungs-Hinterschnitte des Bauteils bekanntermaßen Formeinlagen in den Formhälften eingelegt werden, jedoch ist deren Positionierung und Fixierung in den Formhälften schwierig und umständlich. Nach dem Entformen muss das Werkzeug, die Formeinlagen und das Bauteil unter erheblichen Aufwand gereinigt werden. In der Folge sinkt die Produktivität und die Bauteilqualität wird beeinträchtigt. Das notwendige Handling ist zudem für eine Serienfertigung solcher Bauteile ungeeignet.

Aufgabe ist es daher, eine Vorrichtung nach der bekannten Art weiterzuentwickeln, welche mit geringem technischem Aufwand eine verbesserte Produktivität des RTM-Verfahren für komplex geformte Bauteile ermöglicht.

Weiter ist zur Aufgabe gestellt, mittels einer weiterentwickelten Vorrichtung die Qualität der gefertigten Bauteile und die Einsatzbreite des RTM-Verfahrens zu verbessern.

Zur Lösung des Problems ist erfindungsgemäß vorgesehen, dass das Werkzeug einen hohlkörperartig ausgebildeten Dichtungsrahmen aufweist, in welchem das Faserhalbzeug anordenbar ist, und die Werkzeugteile derart ausgebildet und dem einen Dichtungsrahmen zuordenbar sind, dass im geschlossenen Zustand die Werkzeugteile dicht mit dem einen Dichtungsrahmen verbunden sind.

Der hohlkörperartig ausgebildete Dichtungsrahmen und die korrespondierend zu diesem Dichtungsrahmen gestalteten Werkzeugteile, die in ihrer räumlichen Zuordnung zum Dichtungsrahmen über dessen Umfang verteilt und teilweise oder ganz im oder am Dichtungsrahmen angeordnet sein können, bilden das erfindungsgemäße, dreidimensional zusammengesetzte, mehrteilige Werkzeug.

Mit diesem erfindungsgemäßen mehrteiligen Werkzeug zur Formung und Harzinfiltration können entsprechend der vielseitigen Gestaltungsmöglichkeit des hohlkörperartigen Dichtungsrahmens ein Vielzahl Werkzeugteile beteiligt sein, die verschiedene Entformungsrichtungen realisieren, wie beispielhaft in den nachfolgenden Ausführungsbeispielen belegt ist.

Mit Hilfe dieses mehrteiligen Werkzeugs sind somit die verschiedensten Hinterschneidungsformen des herzustellenden Bauteils abbildbar, wobei die Verwendung von besonderen Formeinlagen weitestgehend minimiert werden kann.

Alle formgebenden Funktionsoberflächen der Werkzeugteile bilden im geschlossenen Zustand des Werkzeuges gemeinsam die Kavität des herzustellenden Bauteils und formen unter der Druckwirkung der Werkzeugteile das eingeschlossene Faserhalbzeug, wobei die Werkzeugteile zugleich gegenüber dem Dichtungsrahmen abgedichtet sind. Der Kraftfluss der zusammenwirkenden Werkzeugteile wird in diese Zustand auf den Dichtungsrahmen übertragen, wobei dieser selbst jedoch keinen Kontakt mit dem Faserhalbzeug bzw. mit dem herzustellenden Bauteil hat.

Das ermöglicht eine von der Bauteilform unabhängige, und damit in ihrer Gestaltung freie Abdichtung der Werkzeugteile gegenüber dem Dichtungsrahmen, die somit besser an die Dichtheitsanforderungen angepasst werden kann.

Es wird hierdurch ein zuverlässig dichter Verschluss des Faserhalbzeuges gegenüber der Umgebung während des Herstellungsprozesses gewährleistet.

Die Werkzeugteile werden nach der Infiltration und Aushärtung des Harzes im Fasermaterial geöffnet und in den verschiedenen Entformungsrichtungen vom Dichtungsrahmen wegbewegt, so dass das fertiggestellte Bauteil zugänglich ist und aus dem Dichtungsrahmen entnommen werden kann.

Hierbei kann zumindest ein bewegliches Werkzeugteil vorteilhafter Weise als Mittel zur Entnahme des Bauteils aus dem Dichtungsrahmen dienen, indem das fertiggestellte, auf der formgebenden Funktionsfläche des Werkzeugteils sitzende Bauteil gemeinsam mit dem Werkzeugteil herausgeführt wird.

Es können mit der erfindungsgemäßen Vorrichtung komplexe Bauteile, wie z. B. Bauteile mit einer aus einem Felgenbett und einer Radscheibe bestehenden Radgeometrie, mit geringem Aufwand und hoher Qualität serienmäßig gefertigt werden.

Vorteilhafte Ausgestaltungen und Weiterbildungen der Erfindung gehen aus den Unteransprüchen, der nachfolgenden Beschreibung und den zugehörigen Zeichnungen hervor.

Nach einer vorteilhaften Ausgestaltung der Vorrichtung ist wenigstens ein Werkzeugteil in einer am Umfang des Dichtungsrahmens ausgebildeten Rahmenöffnung aufnehmbar. Hierdurch kann das Werkzeugteil, wie auch jedes weitere Werkzeugteil, sicher am oder im Dichtungsrahmen gelagert, geführt bzw. abgestützt werden. Es wird mithin ein größere Flächenanteil des Dichtungsrahmens bereitgestellt, welcher der Dichtung des Werkzeugteils gegen den Dichtungsrahmen dienen kann.

Besonders vorteilhaft ist in diesem Zusammenhang, dass an dem Werkzeugteil eine Dichtfläche ausgebildet ist, die mit einer die Rahmenöffnung umschließenden Dichtfläche des Dichtungsrahmens korrespondiert. Die korrespondierenden Dichtflächen des Werkzeugteils und des Dichtungsrahmens sind im geschlossenen Zustand des Werkzeugs wesentliche Bestandteile einer Dichtungsanordnung, die eine großflächig dichtende Verbindung zwischen dem Werkzeugteil und dem Dichtungsrahmen herstellt, welche die erforderliche Vakuumdichtheit des unter Druck stehenden geschlossenen Werkzeugs gewährleistet.

Eine die Rahmenöffnung umschließende Dichtfläche kann auf einer um die Rahmenöffnung umlaufenden äußeren Oberfläche des Dichtungsrahmens und/oder auf den inneren Wandflächen der Rahmenöffnung ausgebildet sein.

Korrespondierend dazu kann die Dichtfläche des Werkzeugteils auf einer der äußeren Oberfläche des Dichtungsrahmens zugewandten stirnseitigen Fläche und/oder an seitlichen Flächen, welche den inneren Wandflächen der Rahmenöffnung zugewandt sind, ausgebildet sein.

Vorzugsweise ist auf der Dichtfläche des Werkzeugteils und/oder der Dichtfläche des Dichtungsrahmens ein umlaufendes Dichtelement, wie zum Beispiel ein Dichtring oder eine Dichtschnur, angeordnet oder ausgebildet, welches die erforderliche Vakuumdichtheit der Dichtungsanordnung im geschlossenen Werkzeugs verbessert. Vor allem ist mit der umlaufenden Anordnung bzw. Ausbildung auf den Dichtflächen des Werkzeugteils bzw. des Dichtungsrahmens eine stoß-, unterbrechungs- und kreuzungsfreie Verlegung des Dichtelements verbunden, so dass infolge dieser Homogenität des Dichtelements örtliche Schwachstellen der Vakuumdichtigkeit vermieden werden.

Die Vakuumdichtheit wird auch dadurch weiter verbessert, dass die Dichtfläche des Werkzeugteils und/oder die Dichtfläche des Dichtungsrahmens eine umlaufende Nut zur Einlage des Dichtelementes aufweist.

Nach einer weiteren vorteilhaften Ausgestaltung weist wenigstens ein Werkzeugteil einen lösbar verbundenen Formeinsatz auf, auf dem die formgebende Funktionsoberfläche ausgebildet ist, was einen einfachen Austausch der Formflächen in Abhängigkeit des Fertigungsauftrages und des Verschleißes ermöglicht, ohne das gesamte Werkzeugteil auswechseln zu müssen. Wichtige Funktionselemente des Werkzeugteils, wie z.B. Heizung und Sensorik zur Temperierung des Werkzeugteils und des Bauteils, Dichtelemente oder Anschlusselemente für eine Antriebseinheit des Werkzeugteils, sind vorzugsweise separiert zum lösbar verbundenen Formeinsatz angeordnet, so dass der Austausch des Formeinsatzes unkompliziert und kostengünstig realisierbar ist.

Weiter ist es vorteilhaft, wenn wenigstens ein Werkzeugteil eine Grundplatte aufweist, die im geschlossenen Zustand des Werkzeuges eine Rahmenöffnung überdeckt.

Die Grundplatte ermöglicht infolge des überdeckenden Sitzes eine verbesserte Kraftverteilung auf den Dichtungsrahmen im geschlossenem, druckbeaufschlagtem Zustand des Werkzeugs während des Form- und Infiltrations- Vorganges.

Aufgrund ihrer überdeckenden Ausführung können wesentliche Funktionselemente des Werkzeugteils - außer der formgebenden Funktionsoberfläche - vorteilhaft in der Grundplatte integriert sein, da sie somit weitestgehend von außen zugänglich bleiben.

Nach einer Weiterentwicklung ist es besonders vorteilhaft, dass im geschlossenen Zustand des Werkzeuges eine Dichtungsanordnung zwischen der Grundplatte wenigstens eines Werkzeugteils und dem Dichtungsrahmen ausgebildet ist.

Die Dichtungsanordnung ist nach dieser Ausführung aus den zu einander zugewandten, korrespondierenden Dichtflächen der Grundplatte des Werkzeugteils und der Rahmenöffnung des Dichtungsrahmens sowie einem oder mehreren Dichtelementen gebildet.

Die Dichtfläche der Grundplatte ist an einer Stirnfläche der Grundplatte ausgebildet, die der äußeren Oberfläche des Dichtungsrahmens zugewandten ist und an der das Werkzeugteil im geschlossenen Zustand am Dichtungsrahmen anliegt. Die um die Rahmenöffnung umlaufende äußere Oberfläche des Dichtungsrahmens bildet dabei die korrespondierende Dichtfläche der Rahmenöffnung.

Diese Dichtungsanordnung befindet sich im geschlossenen Zustand des Werkzeuges unmittelbar im Kraftfluss und erzeugt eine besonders gute Flächendichtung des Werkzeugteils gegenüber dem Dichtungsrahmen.

Ergänzend oder alternativ ist es besonders vorteilhaft, dass im geschlossenen Zustand des Werkzeuges eine Dichtungsanordnung zwischen dem Formeinsatz wenigstens eines Werkzeugteils und dem Dichtungsrahmen ausgebildet ist. Der Vorteil ergibt sich im Zusammenhang mit dem konstruktiv bedingten Spaltraum, der sich zwischen den Seitenwänden der benachbart angeordneten Werkzeugteile und/oder zwischen der Innenwand der Rahmenöffnung und der Seitenwand eines jeden Werkzeugteils ein Spaltraum ausbildet. Während des Infiltrationsprozesses füllt sich der Spaltraum mit Harz aus und härtet zu einem mit dem zu fertigenden Bauteil verbundenen Harzkörper aus.

Die Dichtungsanordnung nach dieser Ausführung ist aus den zu einander zugewandten, korrespondierenden Dichtflächen des Formeinsatzes des Werkzeugteils und der Rahmenöffnung des Dichtungsrahmens sowie einem oder mehreren Dichtelementen gebildet und befindet sich daher im geschlossenen Zustand des Werkzeuges nahe oder unmittelbar an der Kavität des Werkzeuges. Infolge des bauteilnahen Sitzes dieser Dichtungsanordnung erfolgt weniger Harzeintrag in den Spaltraum zwischen den Seitenwänden des Formeinsatzes und den Innenwänden der zugehörigen Rahmenöffnung, wodurch die Größe der anfallenden Harzkörper deutlich minimiert werden kann.

Zur Beschleunigung der Konsolidierungsvorganges des infiltrierten Faserhalbzeuges ist es günstig, das infiltrierte Faserhalbzeug während der Aushärtung zu temperieren. Besonderes effizient und zielgerichtet wirkt die Temperierung, wenn der Dichtungsrahmen und/oder wenigstens ein Werkzeugteil beheizbar ausgebildet sind.

Vorzugsweise ist die Heizungseinrichtung in der Grundplatte des Werkzeugteils angeordnet, wobei der mit der Grundplatte verbundene Formeinsatz des Werkzeugteils wie auch der anliegende Dichtungsrahmen infolge der Wärmeleitung ausreichend von der Temperierung profitieren kann.

Eine konstruktiv günstige Ausgestaltung der Vorrichtung sieht vor, dass wenigstens ein Werkzeugteil mittels eines Führungs- und Antriebsmittels verfahrbar ausgebildet ist, womit einzelne Prozessschritte des Herstellungsverfahrens automatisierbar sowie schneller und präziser steuerbar sind.

Vorzugsweise ist das Führungs- und Antriebsmittel mit der Grundplatte des Werkzeugteils verbunden, wodurch Druck- und Zugkräfte gleichmäßig auf das Werkzeugteil bzw. auf die formgebende Funktionsoberfläche des Formeinsatzes übertragen werden können.

Zum Zwecke der Automatisierung der Entformung des fertiggestellten Bauteils bzw. zur leichteren und selbstständigen Ablösung der sich bildenden Harzkörper vom Werkzeugteil bzw. Dichtungsrahmen weist wenigstens eine Seitenwand des Werkzeugteils und/oder wenigstens eine Innenwand der Rahmenöffnung eine Entformungsschräge auf.

Dem vorgenannten Zweck entsprechend ist es förderlich, dass eine formgebende Funktionsoberfläche und/oder die Seitenwände des Werkzeugteils und/oder die Innenwände der Rahmenöffnung poliert und/oder mit einem Trennmittel ausgebildet sind.

Gemäß einer bevorzugten Ausgestaltung der Erfindung ist vorgesehen, dass die Innenwand der Rahmenöffnung und/oder die Seitenwand des Werkzeugteils derart ausgebildet sind, dass der konstruktiv bedingte Spaltraum zwischen den Formeinsätzen der benachbart angeordneten der Werkzeugteile und/oder zwischen einer Rahmenöffnung und einem Werkzeugteil aufweist.

Die durch die Gestaltung der Rahmenöffnung und der Formeinsätze bewirkten umlaufenden Einschnürungen des Spaltraumes erzeugen gezielt ringförmige Sollbruchstellen in den sich während des Infiltrations- und Konsolidierungsvorganges bildenden Harzkörper. Entlang der Sollbruchstellen werden beim Ausfahren der Werkzeugteile aus dem Dichtungsrahmen die Harzkörper selbsttätig voneinander und vom gefertigten Bauteil abgetrennt und mit den Werkzeugteilen entnommen.

Des Weiteren kann am Dichtungsrahmen oder am Werkzeugteil ein separates Mittel zum Trennen der Harzkörper, wie zum Beispiel Stoßkanten, vorgesehen sein, durch welche die Harzkörper auf einfache Weise beim Ausfahren der Werkzeugteile bzw. bei der Entnahme des fertiggestellten Bauteils voneinander getrennt bzw. vom Bauteil abgebrochen werden können.

Die auf den Werkzeugteilen verbliebenen Harzkörper können vorzugsweise mittels einem externen oder einem im Werkzeugteil integrierten Abstreifmittel von den Werkzeugteilen abgestreift werden.

Diese vorteilhaften Merkmale der Vorrichtung im Einzelnen oder in Kombination ermöglichen eine besonders saubere, kontrollierte und vollautomatisierbare Entformung des Bauteils und Entsorgung der Harzkörper. Verschmutzungen des Werkzeugs durch Harzsplitter sind weitestgehend vermieden.

Diese vorteilhaften Merkmale der Vorrichtung im Einzelnen oder in Kombination ermöglichen eine besonders saubere, kontrollierte und vollautomatisierbare Entformung des Bauteils und Entsorgung der Harzkörper. Verschmutzungen des Werkzeugs durch Harzsplitter sind weitestgehend vermieden.

Bevorzugt weist die umlaufende Einschnürung eine im Verhältnis zur Spaltbreite des Spaltraumes deutlich geringere Einschnürungsbreite auf, wobei vorzugsweise die Spaltbreite des Spaltraumes im Bereich von 0,1 bis 3,0 mm und die Einschnürungsbreite im Bereich von 0,01 bis 0,5 mm ausgebildet sind. Hierdurch sind die abzutrennenden Harzkörper besonders eigenstabil und die Abtrennung der Harzkörper entlang der Sollbruchstellen erfolgt sehr zuverlässig bei geringer Fehlbruchrate.

Nach einer weiteren vorteilhaften Ausgestaltung ist vorgesehen, dass in dem Dichtungsrahmen einlegbarer Formeinsatz (Einlege-Formeinsatz) anordenbar ist, der eine formgebende Funktionsoberfläche hat, die, wie die formgebende Funktionsoberfläche der beteiligten, beweglichen Werkzeugteile, einen Teil der Kontur der Faserpreform bzw. des Bauteils abbildet, wobei der Einlege-Formeinsatz die Formeinsätze der beweglichen Werkzeugteile zum Zweck der gemeinsamen Bildung der Kavität des Bauteils ergänzt.

Der einlegbare Formeinsatz kann gemeinsam mit dem Faserhalbzeug im Dichtungsrahmen angeordnet sein.

Diese Ausführung verringert bei selbigen Anforderungen an die Gestaltung und Herstellung des Bauteils den Umfang an beweglichen Werkzeugteilen und mindert durch reduzierte Spalträume den Harzeintrag.

Der einlegbare Formeinsatz ist individuell austauschbar und erhöht damit die Einsatzvariabilität des Werkzeuges.

Mit Hilfe des einlegbaren Formeinsatzes sind besondere schwer zugängliche, hinterschneidende Ausnehmungen des Faserhalbzeuges bzw. des Bauteils abbildbar.

Bei dieser Ausführung kann eine gemeinsame Beschickung von Faserhalbzeug und Formeinsatz bzw. eine gemeinsame Entnahme des fertigen Bauteils mit dem Formeinsatz in verschiedener Richtung durch die vorhandenen Rahmenöffnungen erfolgen, was in Einzelfällen ein technologischer Vorteil bedeuten kann.

Diese und weitere aus den Ansprüchen, der Beschreibung und den Zeichnungen hervorgehenden Merkmale ergeben jeweils für sich oder in Kombination vorteilhafte Ausführungsformen der Erfindung, für die hier Schutz beansprucht wird.

Die erfindungsgemäße Werkzeugvorrichtung und die erfindungsgemäßen Verfahrensabläufe in Anwendung dieser Werkzeugvorrichtung werden nachfolgend an mehreren Ausführungsbeispielen näher erläutert. Die zugehörigen Zeichnungen zeigen in einer schematischen Darstellung in
- Fig. 1: Explosionsdarstellung eines mehrteiliges Werkzeugs mit einem Dichtungsrahmen in Würfelform und sechs Werkzeugteilen,
- Fig. 2: isometrische Ansicht des Faserhalbzeugs nach Fig. 1,
- Fig. 3: isometrische Ansicht des Werkzeuges nach Fig. 1 in einer Ausgangsstellung vor der Bestückung des Dichtungsrahmens,
- Fig. 4: Schnittansicht A des Werkzeuges nach Fig. 1 in Ausgangsstellung,
- Fig. 5: isometrische Ansicht des Werkzeuges nach Fig. 1 nach dem Verschließen der Werkzeugteile,
- Fig. 6: Schnittansicht B des Werkzeuges nach Fig. 1 dem Verschließen der Werkzeugteile,
- Fig. 7: Detailansicht X des Werkzeuges nach Fig. 1,
- Fig. 8: isometrische Ansicht des Werkzeugs nach Fig. 1 im geöffneten Zustand nach der Harzinfiltration und Aushärtung des Bauteils,
- Fig. 9: Schnittansicht eines mehrteiligen Werkzeugs nach einem zweiten Ausführungsbeispiel mit 11einer Dichtungsanordnung zwischen Dichtungsrahmen und Formeinsatz des Werkzeugteils,
- Fig. 10: Detailansicht Y des Werkzeuges nach Fig. 9,
- Fig. 11: Schnittansicht eines Werkzeugs nach einem dritten Ausführungsbeispiel mit einem eingeschnürten Spaltraum,
- Fig. 12: Detailansicht Z des Werkzeugs nach Fig. 11,
- Fig. 13: isometrische Ansicht des Werkzeugs nach Fig. 11 im geöffneten Zustand nach der Infiltration und Aushärtung des Bauteils,
- Fig. 14: isometrische Ansicht des Werkzeugs nach Fig. 11 beim Vorgang der Harzkörperentfernung,
- Fig. 15: isometrische Ansicht eines mehrteiligen Werkzeugs nach einem vierten Ausführungsbeispiel mit einem im Dichtungsrahmen integriertem Formeinsatz und fünf beweglichen Werkzeugteilen,
- Fig. 16: Schnittansicht C des mehrteiligen Werkzeugs nach Fig. 15, vor dem Verschließen der Werkzeugteile,
- Fig. 17: Schnittansicht des Werkzeuges nach Fig. 15, nach Verschluss der Werkzeugteile,
- Fig. 18: isometrische Ansicht eines mehrteiligen Werkzeugs nach einem fünften Ausführungsbeispiel mit einem Dichtungsrahmen für einen Einlage-Formeinsatz und fünf beweglichen Werkzeugteilen,
- Fig. 19: Schnittansicht D des mehrteiligen Werkzeugs nach Fig. 18, vor dem Verschließen der Werkzeugteile,
- Fig. 20: Schnittansicht des Werkzeuges nach Fig. 18, nach Verschluss der Werkzeugteile,
- Fig. 21: Explosionsdarstellung eines mehrteiligen Werkzeugs nach einem sechsten Ausführungsbeispiel mit einem Dichtungsrahmen in Form eines Pyramidenstumpfes und sechs Werkzeugteilen,
- Fig. 22: Schnittansicht E des mehrteiligen Werkzeugs nach Fig. 21, in einer Ausgangsstellung vor dem Verschließen der Werkzeugteile,
- Fig. 23: Schnittansicht des Werkzeugs nach Fig. 21, nach Verschluss der Werkzeugteile,
- Fig. 24: isometrische Ansicht eines mehrteiligen Werkzeugs nach einem siebten Ausführungsbeispiel mit einem Dichtungsrahmen in Würfelform und drei Werkzeugteilen,
- Fig. 25: Schnittansicht des Werkzeugs nach Fig. 24, nach Verschluss der Werkzeugteile,
- Fig. 26: isometrische Ansicht eines mehrteiligen Werkzeugs nach einem achten Ausführungsbeispiel für die Herstellung eines Bauteils in Radgeometrie,
- Fig. 27: Schnittansicht des Werkzeuges nach Fig. 26 im geschlossenen Zustand.

Die Figuren zeigen verschiedene Varianten eines erfindungsgemäßen mehrteiligen Form- und Infiltrationswerkzeugs 1.1 bis 1.8 für die Fertigung eines Bauteils 13 aus Faserverbundwerkstoff im RTM-Verfahren.

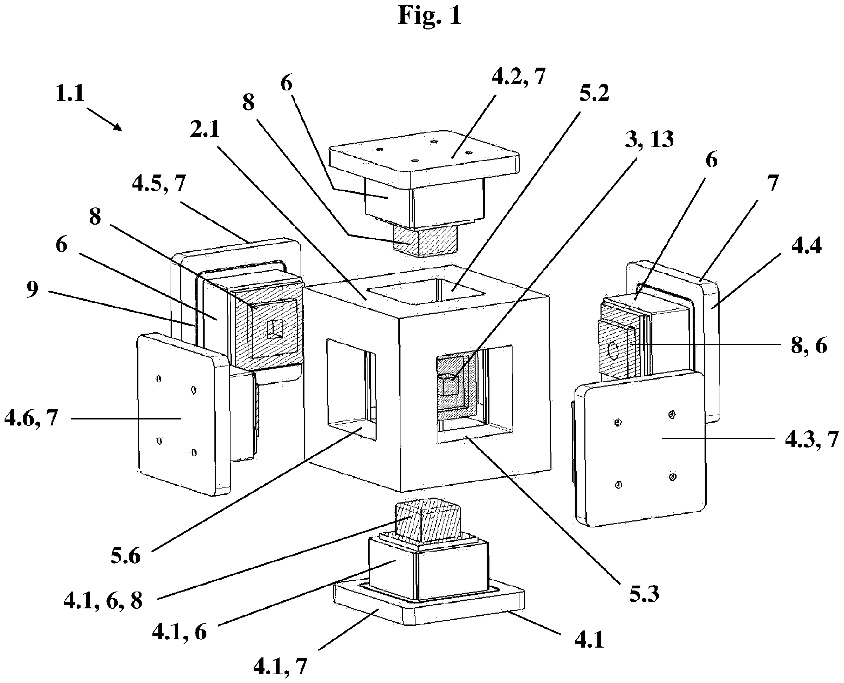

Fig. 1 zeigt in einer Explosionsdarstellung ein mehrteiliges Werkzeug 1.1 nach einem ersten Ausführungsbeispiel mit einem Dichtungsrahmen 2.1 in Würfelform und sechs Werkzeugteilen 4.1 bis 4.6.

Der Dichtungsrahmen 2.1 weist sechs Rahmenöffnungen 5.1 bis 5.6 für die Aufnahme jeweils eines Werkzeugteils 4.1 bis 4.6 auf. Der Durchgangsquerschnitt mindestens einer Rahmenöffnung 5.1 bis 5.6 ist so dimensioniert, dass ein Faserhalbzeug 3, wie beispielhaft in Fig. 1 dargestellt, durch diese Rahmenöffnung innerhalb des Dichtungsrahmens 2.1 positionierbar bzw. das fertiggestellte Bauteil 13 über die Rahmenöffnung 5.1 bis 5.6 aus dem Dichtungsrahmen entnehmbar ist.

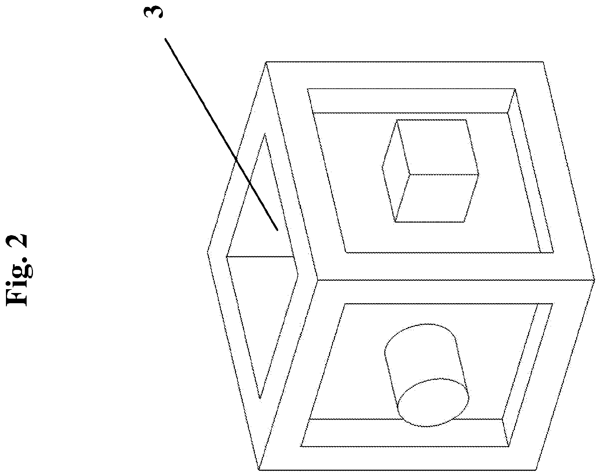

Das im Dichtungsrahmen 2.1 zu positionierende Faserhalbzeug 3 ist zum Beispiel eine vorgeformte Faserpreform, wie sie näher aus Fig. 2 ersichtlich ist. Die Faserpreform 3 weist eine Vielzahl von geformten Ausnehmungen und Vorsprüngen auf.

Nach den Möglichkeiten eines herkömmlichen zweiteiligen Form- und Infiltrationswerkzeugs stellen diese Ausnehmungen und Vorsprünge Hinterschneidungen dar, die nicht oder nur mit erheblichen Aufwendungen form- und entformbar sind.

Mit der erfindungsgemäßen Vorrichtung ist, wie nachfolgend beschrieben, eine einfach und schnelle Bearbeitung der komplex geformte Faserpreform 3 möglich.

Die Werkzeugteile 4.1 bis 4.6 bestehen im Wesentlichen aus jeweils einem Formeinsatz 6 und einer Grundplatte 7. Die Formeinsätze 6 weisen verschiedene, in der Fig. 1 schraffiert dargestellte, formgebende Funktionsoberflächen 8 auf, die jeweils einen Teil der komplexen Kontur der vorgeformte Faserpreform 3 nach Fig. 2 bzw. des zu fertigenden Bauteils 13 abbilden. Die Formeinsätze 6 der Werkzeugsteile 4.1 bis 4.6 sind lösbar mit der jeweiligen Grundplatte 7 verbunden, so dass die Formeinsätze 6 entsprechend des Fertigungsauftrages und des Verschleißgrades individuell ausgetauscht werden können.

Die Grundplatte 7 des jeweiligen Werkzeugteils 4.1 bis 4.6 weist auf einer dem Dichtungsrahmen 2.1 zugewandten Seite eine Dichtfläche mit einer umlaufenden Nut auf, in der ein umlaufendes Dichtelement 9 in Form einer ringförmigen, homogenen Dichtschnur 9 eingelegt ist. Die Dichtfläche der Grundplatte 7 des Werkzeugteils 4.1 bis 4.6 korrespondiert flächig mit einer die zugehörige Rahmenöffnung 5.1 bis 5.6 umgebenden Dichtfläche des Dichtungsrahmens 2.1.

Auf einer dem Dichtungsrahmen 2.1 abgewandten Seite der Grundplatte 7 ist diese jeweils mit einem nicht dargestelltes Führungs- und Antriebsmittel, wie beispielsweise mit einer hydraulischen Stelleinheit, verbunden.

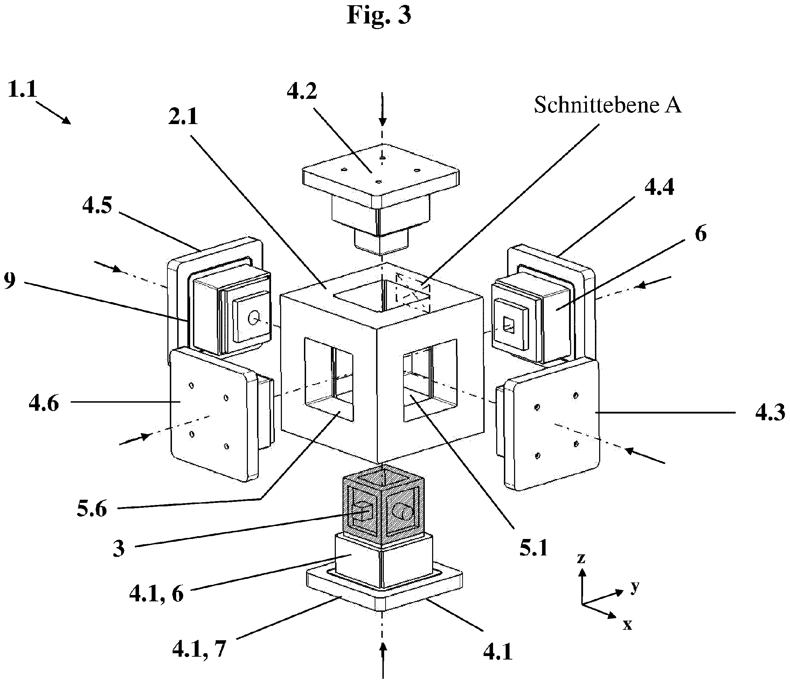

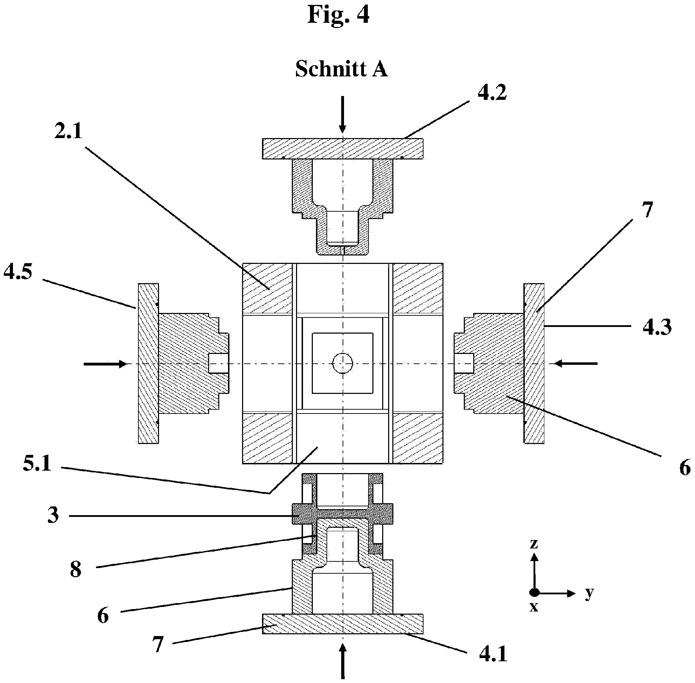

Fig. 3 und 4 zeigen das mehrteilige Werkzeug 1.1 nach Fig. 1 in einer Ausgangsstellung im geöffneten Zustand vor der Bestückung des Dichtungsrahmens 2.1. Die Werkzeugteile 4.1 bis 4.6 können mittels des Führungs- und Antriebsmittels in drei Verfahr-Richtungen entlang einer X-, Y- und Z-Koordinate maschinell und relativ zum Dichtungsrahmen 2.1 bewegt werden. Die Werkzeugteile 4.1 bis 4.6 sind in Fig. 3 und 4 in einer ausgefahrenen Position dargestellt.

Die Positionierung des Faserhalbzeugs 3 im Dichtungsrahmen 2.1 kann z.B. mit Hilfe des Werkzeugteils 4.1 erfolgen, auf dessen formbildenden Funktionsoberfläche 8 des Formeinsatzes 6 das Faserhalbzeug 3 vor dem Einfahren der Werkzeugteile 4.1 bis 4.6 und Verschließen des Werkzeugs 1.1 angeordnet wird. Ist das Faserhalbzeug 3, wie im Ausführungsbeispiel, eine vorgeformte Preform 3 kann die Anordnung auf dem Formeinsatz 6 im Wesentlichen formschlüssig erfolgen.

Alternativ kann das Faserhalbzeug 3 aus zu formenden Fasermatten bestehen, die auf der formgebenden Funktionsoberfläche des Formeinsatzes aufgelegt werden (nicht dargestellt).

Mit dem Einfahren des Werkzeugteils 4.1 in den Dichtungsrahmen 2.1 wird das Faserhalbzeug 3 mitgeführt und im Dichtungsrahmen 2.1 platziert, wobei es die ausreichend große Rahmenöffnung 5.1 des Dichtungsrahmens 2.1 passiert(s. Fig. 3 und Fig. 4).

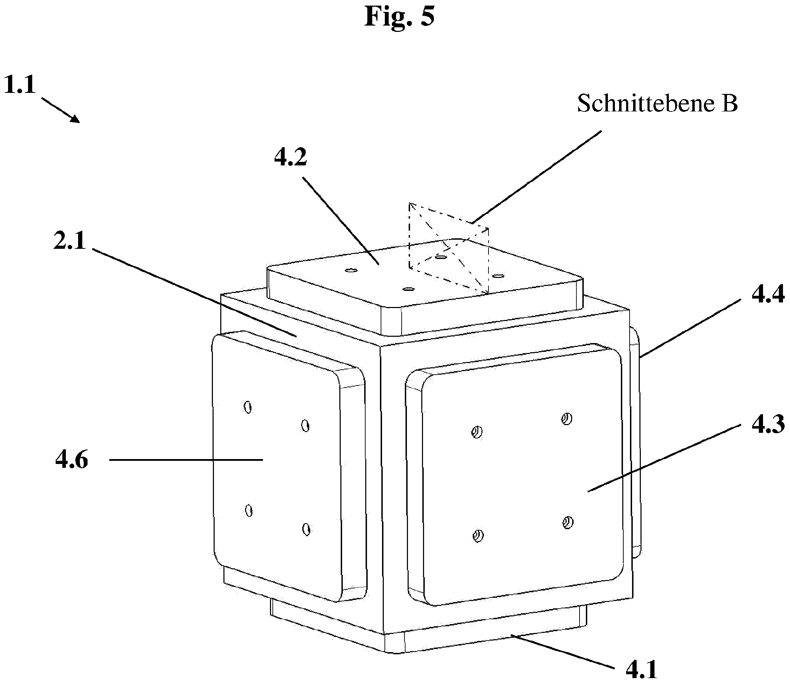

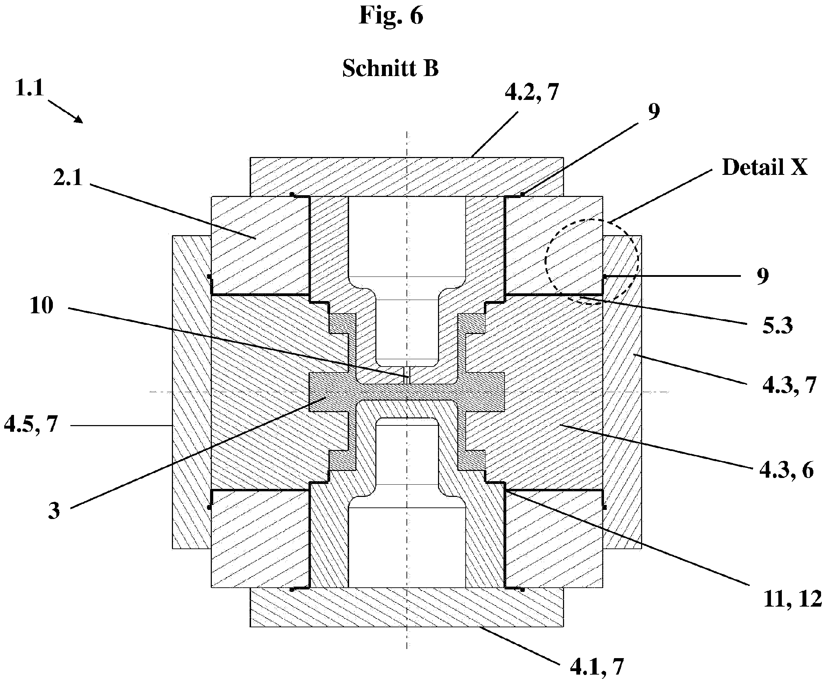

Im geschlossenen Zustand des Werkzeugs 1.1 nach Fig. 5 und 6 sind alle Werkzeugteile 4.1 bis 4.6 in den Rahmenöffnungen 5.1 bis 5.6 platziert, während das Faserhalbzeug 3 eingeschlossen ist und die formgebenden Funktionsoberflächen 8 der Formeinsätze 6 der Werkzeugteile 4.1 bis 4.6 die Kavität für die Formgebung und die Harztränkung des zu fertigen Bauteils 13 bilden.

Die angetriebenen Werkzeugteile 4.1 bis 4.6 stützen sich im geschlossenen Zustand des Werkzeugs 1.1 unter Druckkraft am Dichtungsrahmen 2.1 ab, der damit in den Kraftfluss des zusammengesetzten Werkzeugs 1.1 eingebunden ist.

Die Werkzeugteile 4.1 bis 4.6 schließen mittels jeweils einer Dichtungsanordnung zwischen Dichtungsrahmen 2.1 und Grundplatte 7 des Werkzeugteils 4.1 bis 4.6 dicht an dem Dichtungsrahmen 2.1 an. Damit dichten die Werkzeugteile 4.1 bis 4.6 und der Dichtungsrahmen 2.1 zugleich die Faserpreform 3 gegen die Umgebung ab (s. Fig. 5 und 6).

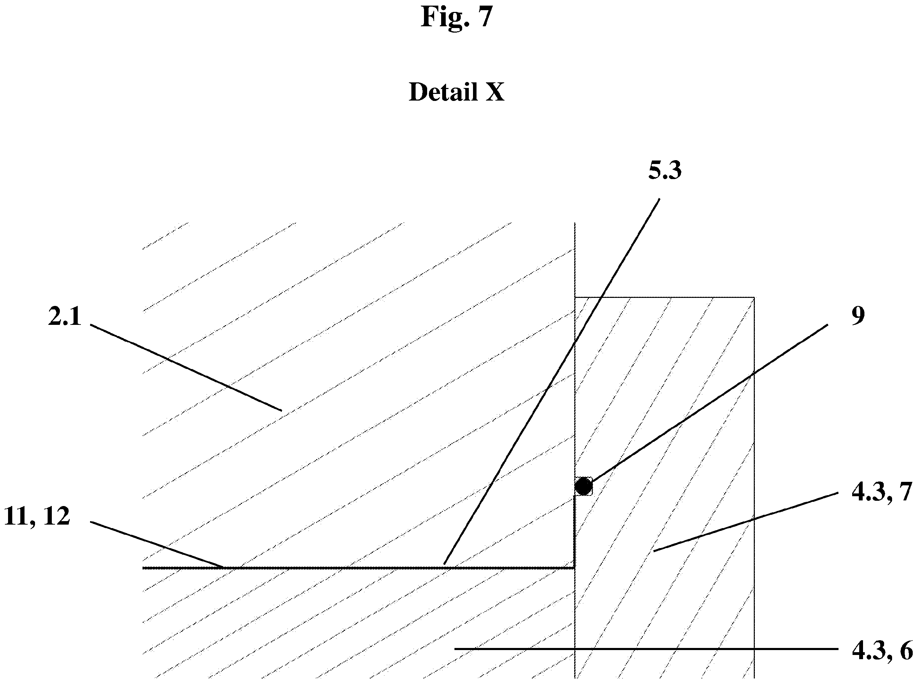

Die Dichtungsanordnung mit den korrespondierenden Dichtflächen des Dichtungsrahmens 2.1 und der Grundplatte 7 sowie der umlaufenden Nut mit eingelegter Dichtschnur 9 ist im Detail X in Fig. 7 vergrößert dargestellt.

Als alternatives Dichtelement 9 kann auf der Dichtfläche der Grundplatte 7 und/oder der Dichtfläche des Dichtungsrahmens 2.1 z. B. ein umlaufendes Kupferband angeordnet oder ausgebildet sein. In jedem Fall sind die einzelnen Dichtelemente 9 zueinander kreuzungsfrei angeordnet.

Somit ist jedes Werkzeugteil 4.1 bis 4.6 getrennt und unabhängig von dem benachbarten Werkzeugteil 4.1 bis 4.6 durch eine geschlossen umlaufende Dichtungsanordnung gegenüber dem Dichtungsrahmen 2.1 abgedichtet. Dichtflächen mit Abkantungen und Kreuzungspunkte von Dichtelementen, welche Undichtigkeiten hervorrufen könnten, sind bei dieser Lösung ausgeschlossen. Im geschlossenen Zustand des Werkzeugs 1.1 wird damit eine zuverlässige Vakuumdichtheit realisiert.

Beim anschließenden Harzinfiltrationsvorgang wird die Kavität über eine Injektionsöffnung 10 eines oder mehrerer Werkzeugteile 4.1 bis 4.6 mit Harz gefüllt und die Faserpreform 3 mit Harz getränkt (nicht im Einzelnen dargestellt).

Im geschlossenen Zustand des Werkzeugs 1.1 verbleibt ein geringfügiger Spaltraum 11 zwischen den Seitenwänden von jeweils aneinander liegenden Formeinsätzen 6 der in benachbarten Rahmenöffnungen 5.1 bis 5.6 sitzenden Werkzeugteile 4.1 bis 4.6 und auch zwischen den Innenwänden jeweils einer Rahmenöffnung 5.1 bis 5.6 und den Seitenwänden jeweils eines Formeinsatzes 6 der in den Rahmenöffnungen 5.1 bis 5.6 sitzenden Werkzeugteile 4.1 bis 4.6 (Fig. 6 und 7). Dieser Spaltraum 11 füllt sich während der Harzinfiltration ebenfalls mit Harz, was in der Schnittdarstellung nach Fig. 6 und 7 als dicke durchgehende Linie dargestellt ist. Die Infiltrationsreste des Harzes im Spaltraum 11 bilden im ausgehärteten Zustand einen dünnen Harzkörper 12 um den jeweiligen Formeinsatz 6 der Werkzeugteile 4.1 bis 4.6.

Zur Beschleunigung des Aushärtevorgangs können der Dichtungsrahmen 2.1 und /oder die Grundplatten 7 der Werkzeugteile 4.1 bis 4.6, beheizbar ausgebildet sein.

Nach dem Aushärtevorgang wird das Werkzeug 1.1 geöffnet, in dem die Werkzeugteile 4.1 bis 4.6 entlang der drei Verfahr-Koordinaten (X-, Y- Z-Koordinate) aus den Rahmenöffnungen 5.1 bis 5.6 des Dichtungsrahmens 2.1 herausgefahren werden.

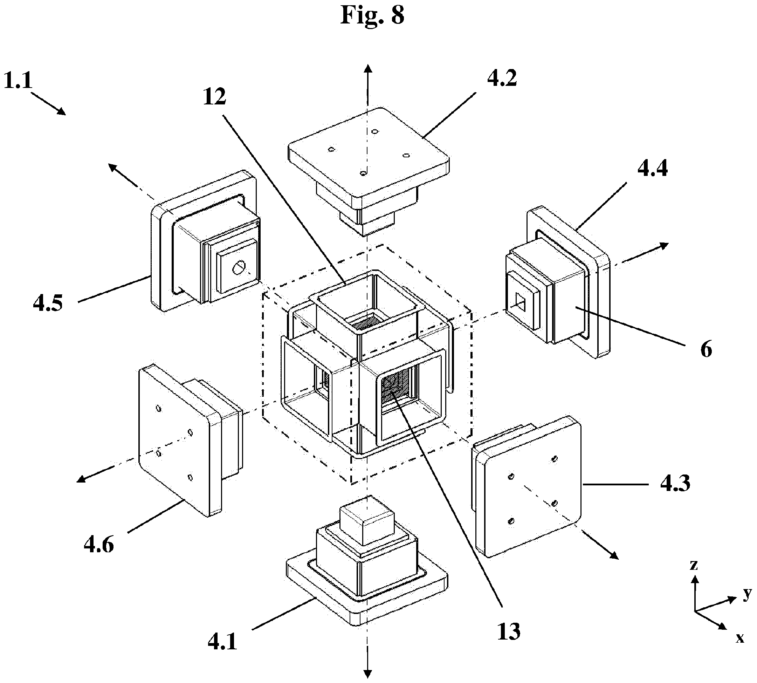

Fig. 8 zeigt das Werkzeug 1.1 nach Fig. 1 nach der Harzinfiltration im geöffneten Zustand nach dem Ausfahren der Werkzeugteile 4.1 bis 4.6 aus dem Dichtungsrahmen 2.1. Zur besseren Darstellung der Harzkörper 12 ist der umgebende Dichtungsrahmen 2.1 hier nur andeutungsweise dargestellt.

Mittels eines auf den Funktionsoberflächen 8 und den Seitenwänden der Formeinsätzen 6 aufgebrachten Trennmittels sind die Werkzeugteile 4.1 bis 4.6 leicht vom ausgehärteten Bauteil 13 und von den gebildeten Harzkörpern 12 lösbar. Zur Unterstützung der Entformung können die Seitenwände der Werkzeugteile 4.1 bis 4.6 und die zu den Seitenwänden korrespondierenden Innenwände der Rahmenöffnungen 5.1 bis 5.6 Entformungsschrägen aufweisen (nicht dargestellt).

Das ausgehärtete Bauteil 13 mit den anhaftenden Harzkörpern 12 verbleibt nach dem Ausfahren der Werkzeugteile 4.1 bis 4.6 zunächst im Dichtungsrahmen 2.1. Es kann anschließend mit einem geeigneten Mittel unter Anwendung einer Schub- oder Zugkraft über eine der Rahmenöffnungen 5.1 bis 5.6 entnommen werden, wobei die dünnwandigen Harzkörper 12 zerstört und vom Bauteil 13 abgetrennt werden (nicht dargestellt).

Im Ergebnis können mit dem erfindungsgemäßen Werkzeug 1.1 nach dem ersten Ausführungsbeispiel drei Entformungsrichtungen entlang der X-, Y- und Z-Koordinate realisiert werden. Komplexe Bauteile mit mehrachsig gerichteten Ausformungen oder Ausnehmungen können somit auf einfache Weise in einem vollautomatischen Prozess gefertigt werden.

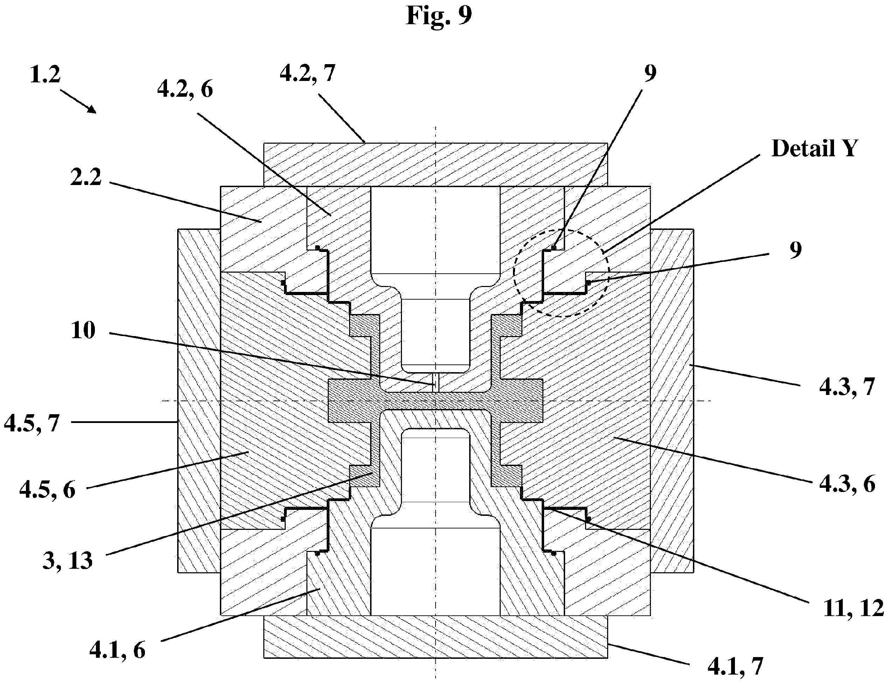

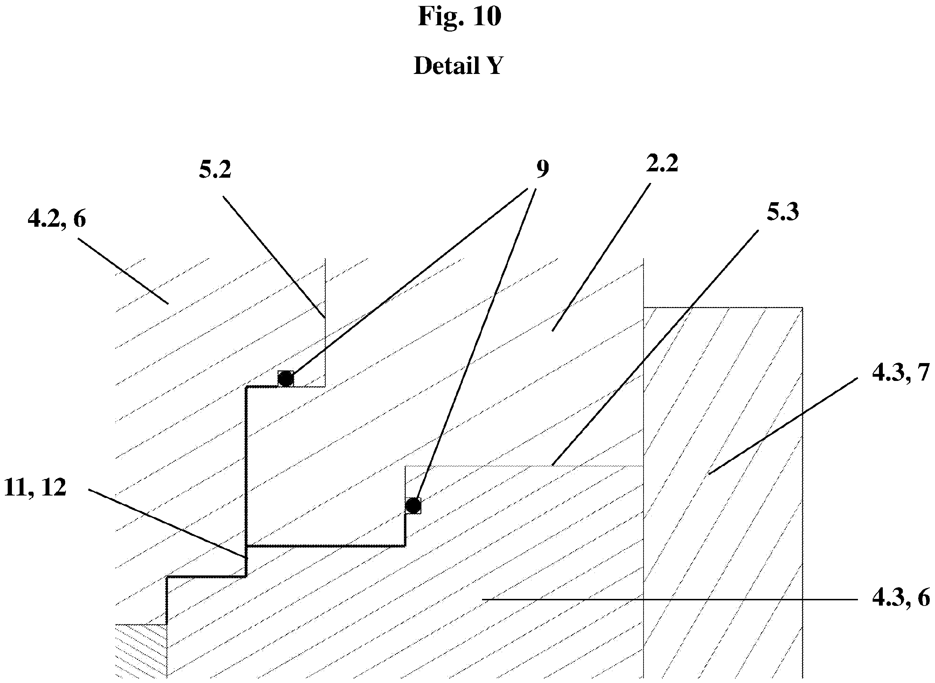

Fig. 9 zeigt eine Schnittansicht eines mehrteiligen Werkzeugs 1.2 im geschlossenen Zustand nach einem zweiten Ausführungsbeispiel. Das Werkzeug 1.2 weist in Besonderheit gegenüber dem Werkzeug nach Fig. 1 einen Dichtungsrahmen 2.2 in Würfelform und sechs zugehörige bewegliche Werkzeugteile 4.1 bis 4.6 auf, die Dichtungsanordnungen realisieren, welche jeweils zwischen einer umlaufenden innenliegenden Dichtfläche der stufig ausgebildeten Rahmenöffnung 5.1 bis 5.6 des Dichtungsrahmens 2.2 und einer umlaufenden, korrespondierenden Dichtfläche des Formeinsatzes 6 des Werkzeugteils 4.1 bis 4.6 angeordnet ist. Diese Dichtungsanordnung ist in der Detailansicht Y nach Fig. 10 vergrößert dargestellt. Die Dichtfläche eines jeden Formeinsatzes 6 weist eine Nut mit einer einliegenden ringförmigen Dichtschnur 9 auf. Infolge des bauteilnahen Sitzes dieser Dichtungsanordnung erfolgt im Vergleich zum Werkzeug 1.1 nach Fig. 1 bis 8 ein geringer erstreckter Harzeintrag in den Spaltraum 11 zwischen den Seitenwänden der Formeinsätze 6 der Werkzeugteile 4.1 bis 4.6 und den Innenwänden der Rahmenöffnungen 5.1 bis 5.6, so dass ein wesentlich kleinerer Harzkörper 12 entstehen kann.

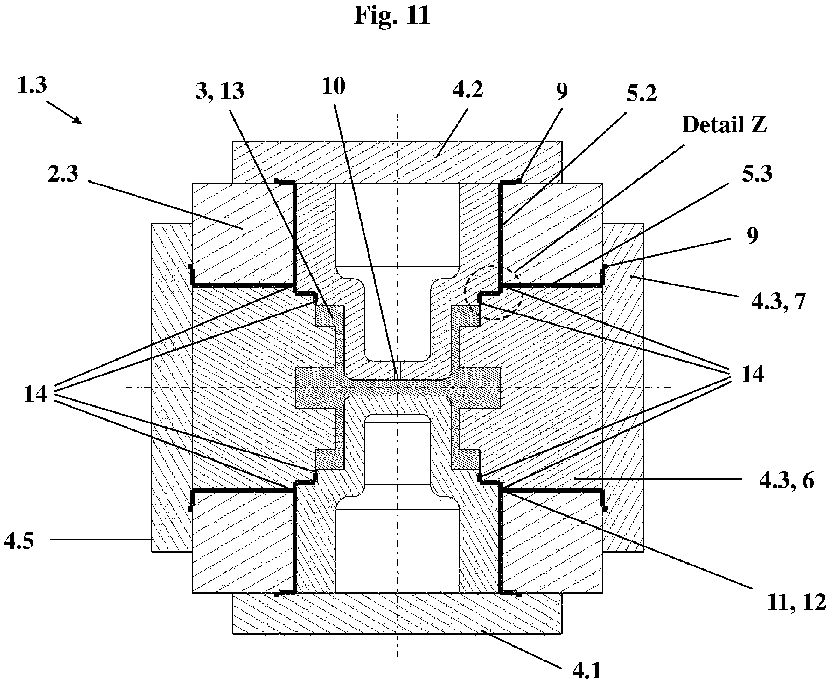

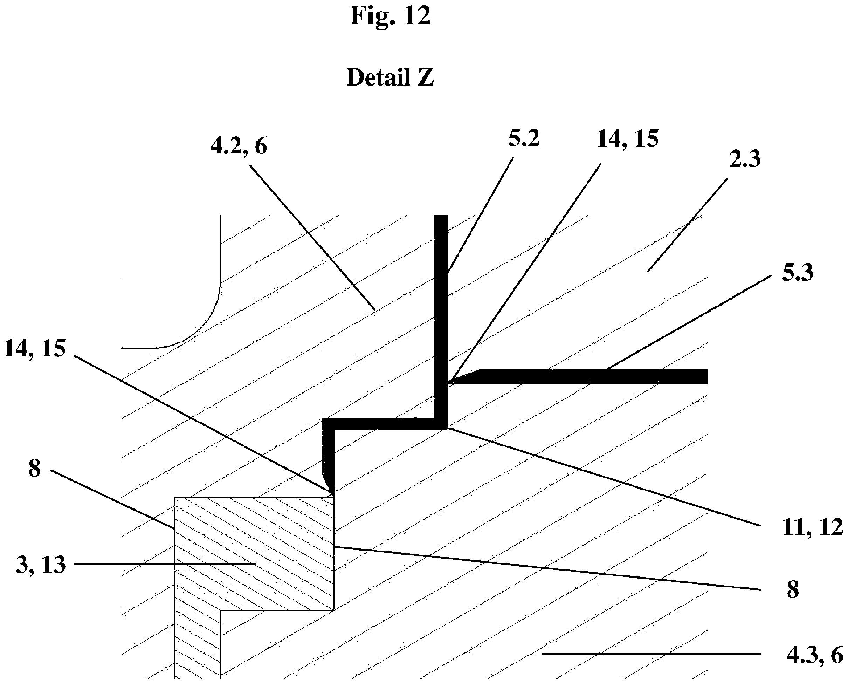

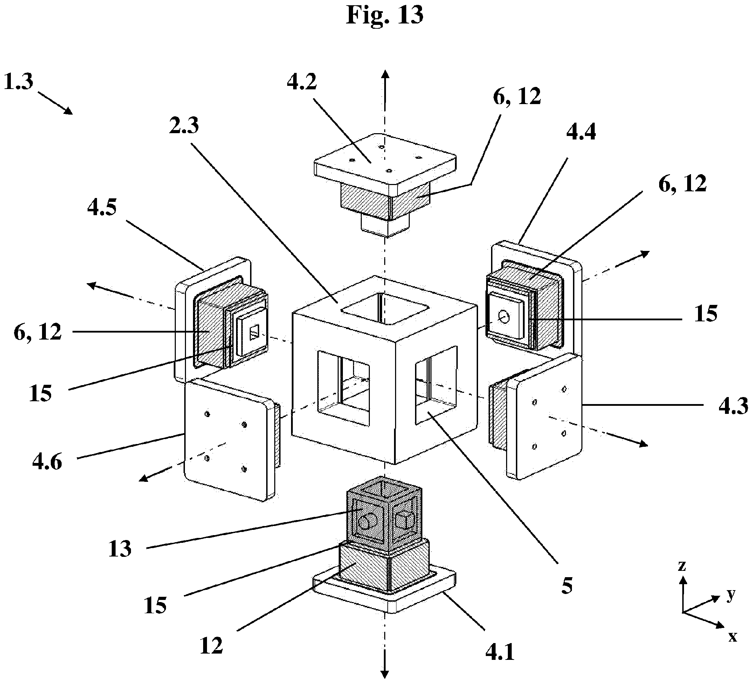

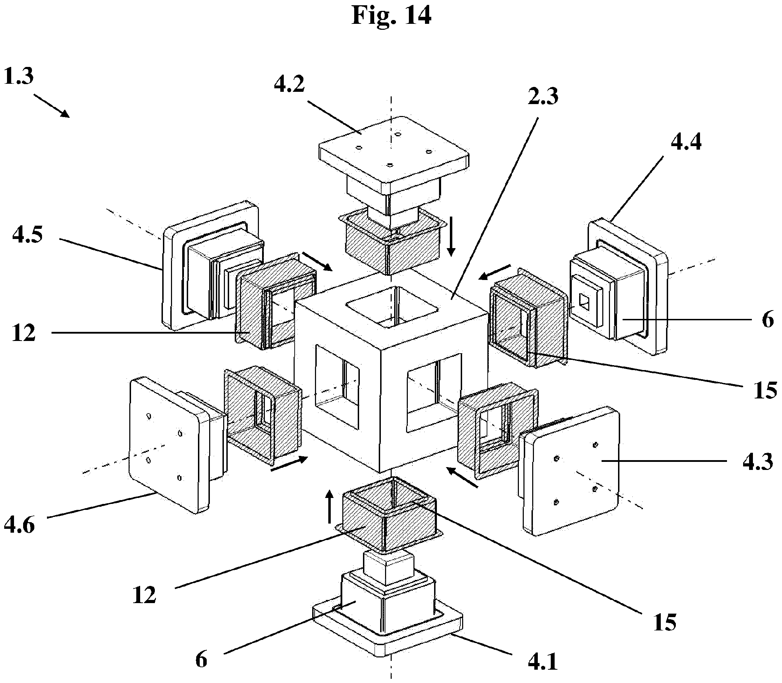

Mit einer dritten vorteilhaften Ausführungsform des erfindungsgemäßen Werkzeugs 1.3 nach Fig. 11 bis 14 ist eine alternative Variante der Entformung des Bauteils 13 realisierbar. Die Fig. 11 und 12 zeigen das Werkzeug 1.3 im geschlossenen Zustand und die Fig. 13 und 14 stellen das Werkzeug 1.3 in einem geöffneten Zustand nach der Infiltration und Aushärtung des Bauteils 13 dar.

Im Unterschied zum Werkzeug 1.1 nach Fig. 1 weist das Werkzeug 1.3 einen würfelförmigen Dichtungsrahmen 2.3 und Werkzeugteile 4.1 bis 4.6 auf, welche im geschlossenen Zustand des Werkzeuges 1.3 einen geweiteten Spaltraum 11 zwischen den benachbarten Formeinsätzen 6 der Werkzeugteile 4.1 bis 4.6 und zwischen jeweils einer Rahmenöffnung 5.1 bis 5.6 und einem Formeinsatz 6 des Werkzeugteils 4.1 bis 4.6 ergeben, welcher mit einer deutlich größeren Spaltbreite, vorzugsweise im einem Bereich von 0,1 bis 3,0 mm, ausgebildet ist (s. Fig. 11).

Der Spaltraum 11 hat mehrere ringförmige Einschnürungen 14, die sich durch eine umlaufende, partielle Ausformung der Innenwand der Rahmenöffnung 5.1 bis 5.6 bzw. durch eine umlaufende, partielle Ausformung der Seitenwand des Formeinsatzes 6 des Werkzeugteils 4.1 bis 4.6 ergeben. Die Einschnürungen 14 des Spaltraumes 11 weisen eine deutlich geringere Einschnürungsbreite als die Spaltbreite des geweiteten Spaltraumes 11 auf. Im konkreten Ausführungsbeispiel ist jeweils eine umlaufende, keilförmige Ausformung der Seitenwand der Formeinsätze 6 des unteren und oberen Werkzeugteils 4.1, 4.2 und jeweils eine umlaufende, keilförmige Ausformung der Innenwand der seitlichen Rahmenöffnungen 5.3, 5.4, 5.5, 5.6 vorgesehen. Diese Ausformungen bewirken insgesamt sechs partielle Einschnürungen 14 des Spaltraumes 11, die an ihrer engsten Stelle eine lichte Einschnürungsbreite von vorzugsweise 0,01 bis 0,5 mm ergeben. Die Ausformung der Formeinsätze 6 der Werkzeugteile 4.1, 4.2. sind nahe der oder unmittelbar angrenzend an der formgebenden Funktionsfläche 8 und damit nahe dem Anschluss des Spaltraumes 11 an die Kavität der Faserpreform 3 bzw. des Bauteils 13 angeordnet, wogegen sich die Ausformung der Rahmenöffnungen 5.3, 5.4, 5.5, 5.6 nahe dem oder am inneren Rand der jeweiligen Rahmenöffnung 5.3, 5.4, 5.5, 5.6 befinden (vgl. Fig. 12).

Beim Aushärten des Harzes schrumpft das im Bereich des geweiteten Spaltraumes 11 befindliche Harzmaterial auf die Formeinsätze 6 der Werkzeugteile 4.1. bis 4.6 auf, wobei die durch die keilförmigen Ausformungen der Rahmenöffnungen 5.3, 5.4, 5.5, 5.6 und der Formeinsätze 6 der Werkzeugteile 4.1, 4.2. bewirkten Einschnürungen 14 des Spaltraumes 11 gezielt sechs umlaufende Sollbruchstellen 15 zur Trennung in sechs stabile Harzkörper 12 entstehen lassen.

Während des Ausfahrens der Werkzeugteile 4.1 bis 4.6 aus dem Dichtungsrahmen 2.3 werden die aufgeschrumpften Harzkörper 12 entlang ihrer Sollbruchstelle 15 splitterfrei getrennt und, auf den Formeinsätzen 6 sitzend, aus dem Dichtungsrahmen abgeführt, wie in Fig. 13 ersichtlich. Dabei brechen die auf den seitlichen Werkzeugteilen 4.3, 4.4, 4.5, 4.6 sitzenden Harzkörper 12 infolge der Ausformung der Rahmenöffnungen 5.3, 5.4, 5.5, 5.6 vom Harzkörper des unteren und oberen Werkzeugteils 4.1, 4.2 ab. Die Harzkörper des unteren und oberen Werkzeugteils 4.1, 4.2 wiederum brechen infolge der Ausformung der Formeinsätze 6 der Werkzeugteile 4.1, 4.2 direkt vom gefertigten Bauteil 13 ab. Die beim Ausfahren der Werkzeugteile 4.1 bis 4.6 getrennten und auf den Formeinsätzen 6 verbleibenden Harzkörper 12 sind in Fig. 13 schraffiert dargestellt.

Zur Unterstützung der selbsttätigen Entformung können auch hier die Seitenwände der Formeinsätze 6 der Werkzeugteile 4.1 bis 4.6 und die zu den Seitenwänden korrespondierenden Innenwände der Rahmenöffnungen 5.1 bis 5.6 Entformungsschrägen aufweisen und mit Trennmittel versehen sein (nicht dargestellt).

Zur kontrollierten Entnahme des fertiggestellten Bauteils 13 ist es günstig, wenn zunächst das obere Werkzeugteil 4.2 und die seitlichen, entlang der X- und Y- Koordinate bewegbaren Werkzeugteile 4.3 bis 4.6 gemeinsam mit ihren Harzkörpern 12 ausgefahren werden. Das Bauteil 13 sitzt sodann mit dem letztlich verbliebenen Harzkörper 12 eigenständig auf dem unteren Werkzeugteil 4.1 auf und kann mit diesem ohne Widerstand nach unten aus dem Dichtungsrahmen 2.3 herausgefahren werden.

Fig. 14 zeigt den Vorgang des Abstreifens der Harzkörper 12 von den Formeinsätzen 6 im ausgefahrenen Zustand der Werkzeugteile 4.1 bis 4.6. Das Abstreifen der ganzen Harzkörper 12 kann beispielsweise mittels ausfahrbarer Stifte erfolgen, die an der Grundplatte 7 angeordnet sind und zum Zwecke des Abstreifens gegen den Harzkörper 12 drücken (nicht dargestellt).

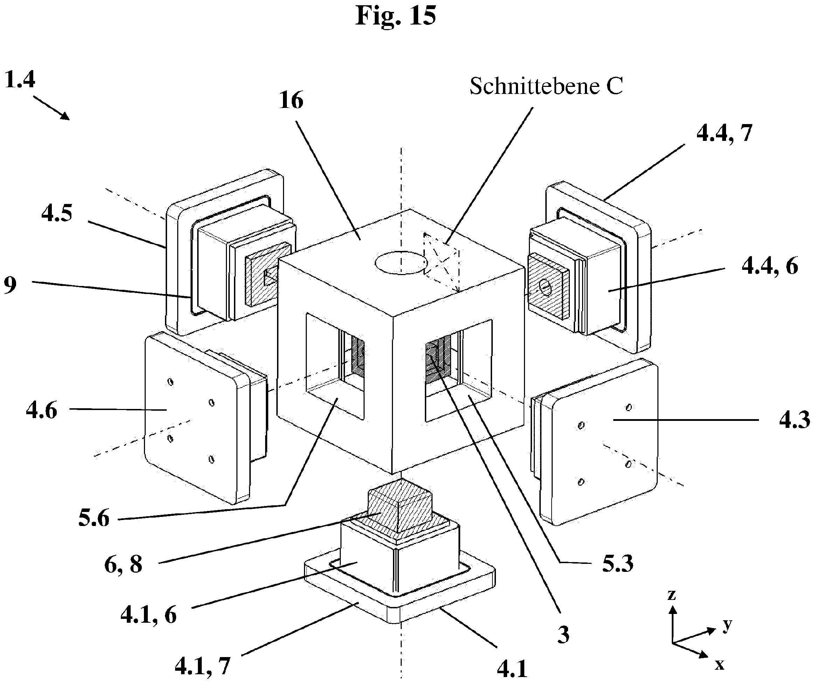

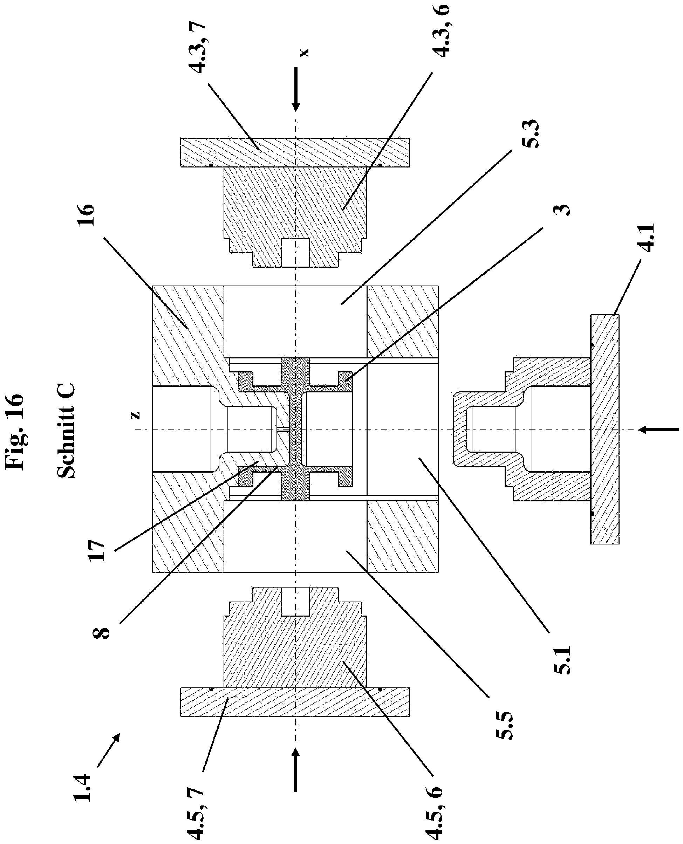

Die Fig. 15 bis 17 zeigen ein mehrteiliges Werkzeug 1.4 nach einem vierten Ausführungsbeispiel, bei dem im Unterschied zum Werkzeug 1.1 nach Fig. 1 ein Dichtungsrahmen 16 vorgesehen ist, der einen nach innen erstreckten Formeinsatz 17 mit einer formgebenden Funktionsoberfläche 8 aufweist, wobei der Formeinsatz 17 des Dichtungsrahmens 16 einstückig mit dem Dichtungsrahmen 16 verbunden ist. Dementsprechend ist der Dichtungsrahmen 16 einseitig geschlossen ausgebildet und hat an den übrigen fünf seiner Seiten jeweils eine Rahmenöffnung 5.1, 5.3 bis 5.6 für die Aufnahme von fünf beweglichen Werkzeugteilen 4.1, 4.3 bis 4.6 mit Formeinstätzen 6.

Der integrale Formeinsatz 17 des Dichtungsrahmens 16 weist, ebenso wie die Formeinsätze 6 der beteiligten, beweglichen Werkzeugteile 4.1, 4.3 bis 4.6 eine formgebende Funktionsoberfläche 8 auf, die einen Teil der Kontur der Faserpreform 3 bzw. des Bauteils 13 abbildet.

Die geschlossene Seite des Dichtungsrahmens 16 ist für einen Einfülltrichter genutzt, wobei die Injektionsöffnung 10 im integralen Formeinsatz 17 mündet.

Die vorgeformte Faserpreform 3 kann in einer geöffneten Ausgangsstellung des Werkzeugs 1.4 auf den integralen Formeinsatz 17 des Dichtungsrahmens 16 aufgesteckt werden, bevor sich die fünf beweglichen Werkzeugteile 4.1, 4.3 bis 4.6 in Richtung der Verfahr-Koordinaten X,Y und Z auf den Dichtungsrahmen 16 zu bewegen, in die vorhanden Rahmenöffnungen 5.1, 5.3 bis 5.6 einfahren und den Dichtungsrahmen 16 verschließen, wie aus Fig. 15 bis 17 ersichtlich ist.

In den entsprechenden Verfahr-Koordinaten erfolgt umgekehrt das Ausfahren der Werkzeugteile 4.1, 4.3 bis 4.6 und die Entformung des Bauteils 13 in Richtung der Z-Koordinate nach der Infiltration und Aushärtung, die hier nicht dargestellt ist.

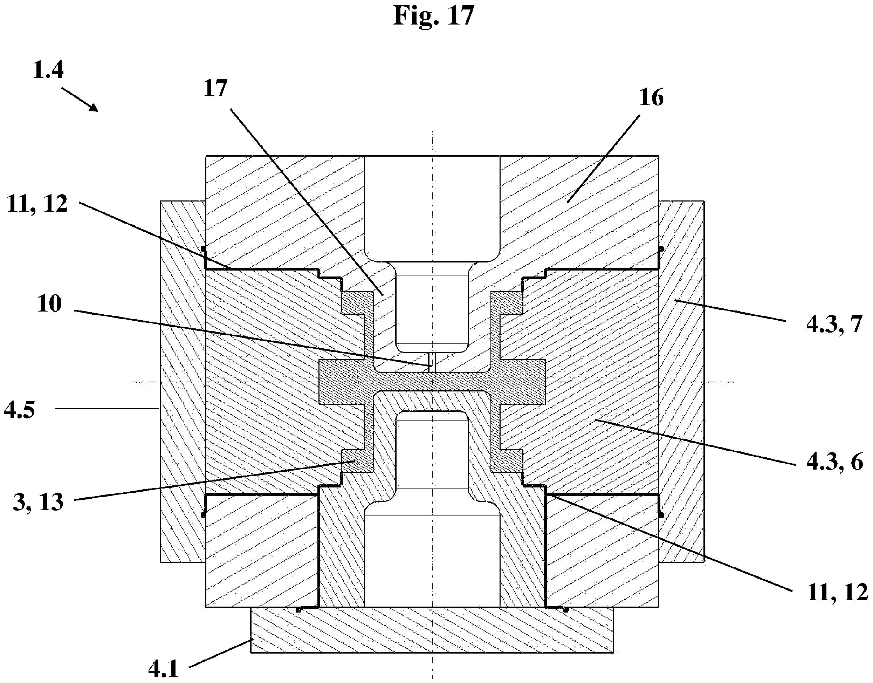

Bei dieser Ausführung zur Herstellung desselben Bauteils 13, wie bei den vorbeschriebenen Ausführungsbeispielen, wird ein bewegliches, angetriebenes Werkzeugteil (4.2) weniger benötigt. Außerdem entfällt im Bereich des integrierten Formeinsatzes 17 der Spaltraum, so dass sich dort kein Harzkörper bildet- ersichtlich aus Fig. 17.

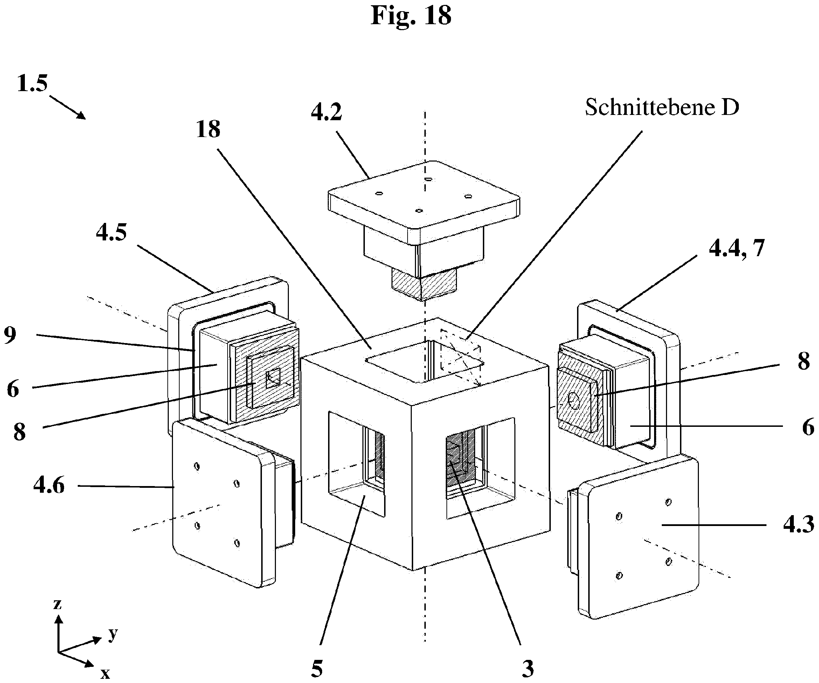

Die Figuren 18 bis 20 bilden ein mehrteiliges Werkzeug 1.5 nach einem fünften Ausführungsbeispiel ab, das einen würfelförmigen Dichtungsrahmen 18 für einen einlegbaren Formeinsatz 19 aufweist. Der Einlege-Formeinsatz 19 kann auch in Kombination mit dem Faserhalbzeug 3 in den Dichtungsrahmen 18 eingelegt sein. Für die Anordnung des Einlege-Formeinsatzes 19 bzw. eines Faserhalbzeuges 3 mit diesem Formeinsatz 19 im Dichtungsrahmen 18 ist dieser einseitig geschlossen ausgebildet. Im Ausführungsbeispiel hat der würfelförmige Dichtungsrahmen 18 an seiner Unterseite einen geschlossenen Rahmenboden und fünf Rahmenöffnungen 5.2 bis 5.6 für die Aufnahme von fünf beweglichen Werkzeugteilen 4.2 bis 4.6.

Der einlegbare Formeinsatz 19 ergänzt die Formeinsätze 6 der beweglichen Werkzeugteile 4.2 bis 4.6 und weist, ebenso wie die beteiligten, beweglichen Werkzeugteile 4.2 bis 4.6 eine formgebende Funktionsoberfläche 8 auf, die einen Teil der Kontur des Faserhalbzeuges 3 bzw. des Bauteils 13 abbildet.

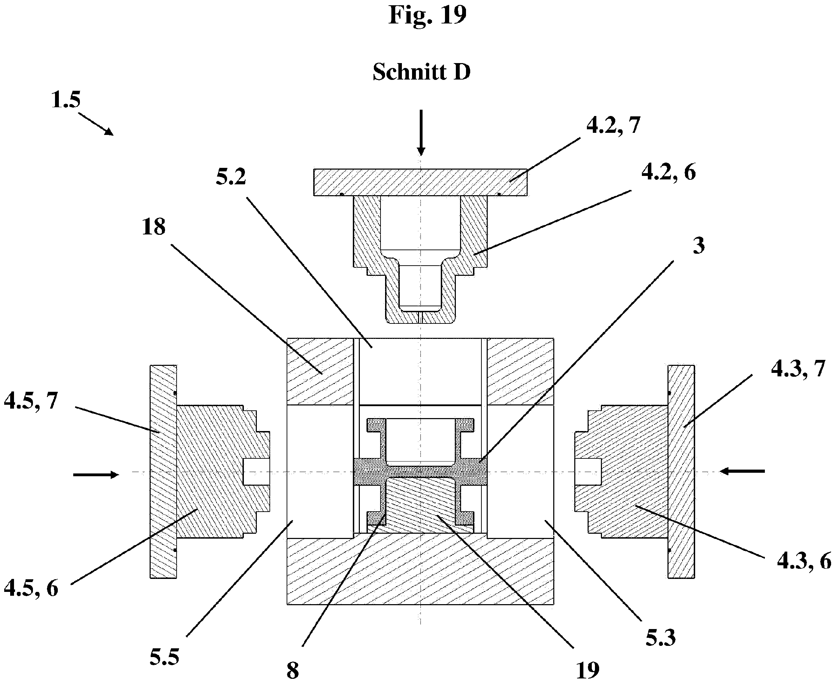

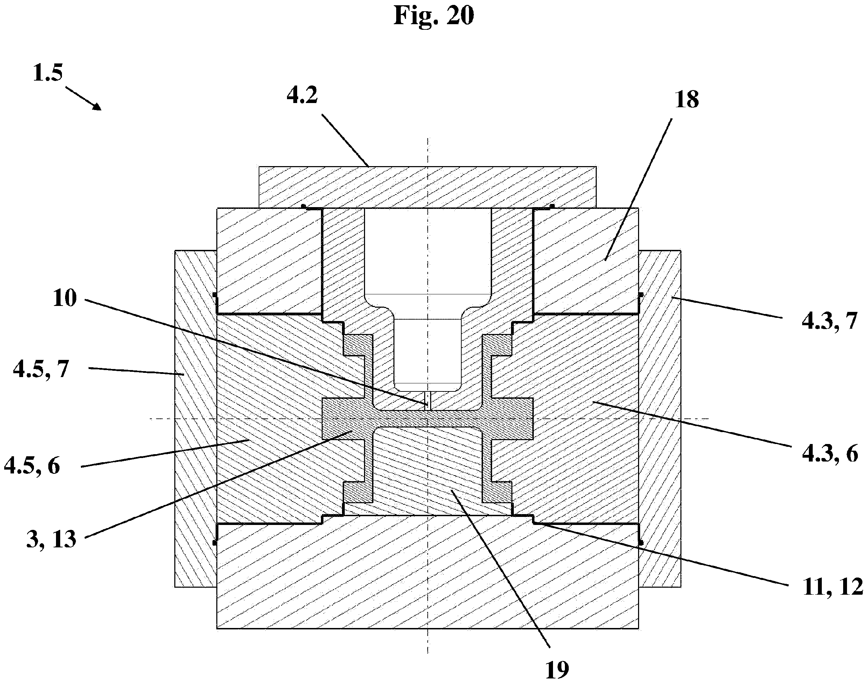

Die Fig. 18 und 19 zeigen das Werkzeug 1.5 in einer geöffneten Ausgangsstellung vor dem Verschließen der beweglichen Werkzeugteile 4.2 bis 4.6 durch die nicht dargestellten Antriebsmittel. Die vorgeformte Faserpreform 3 ist auf der formgebenden Funktionsoberfläche 8 des Einlege-Formeinsatzes 19 formschlüssig angeordnet und gemeinsam mit diesem Formeinsatz 19 auf den geschlossenen Rahmenboden des Dichtungsrahmens platziert, bevor die fünf beweglichen Werkzeugteile 4.2 bis 4.6 in die vorhanden Rahmenöffnungen 5.2 bis 5.6 einfahren und den Dichtungsrahmen 18 verschließen (vgl. Fig. 20).

In den entsprechenden Verfahr-Koordinaten X, Y und Z des Werkzeuges 1.5 erfolgt umgekehrt das Ausfahren der Werkzeugteile 4.2 bis 4.6 und die Entformung des Bauteils 13 nach der Infiltration und Aushärtung, wobei die Entformung der durch den eingelegten Formeinsatz 19 abgebildeten Ausnehmung des Bauteils 13 erst nach der Entnahme der Baugruppe aus dem Dichtungsrahmen 18 ausgeführt wird.

Dabei erfolgt die Beschickung und Entnahme des Bauteils 13 quer zur eigentlichen Formungs- und Entformungsrichtung der durch den einliegenden Formeinsatzes 19 abgebildeten Kontur des Bauteils 13.

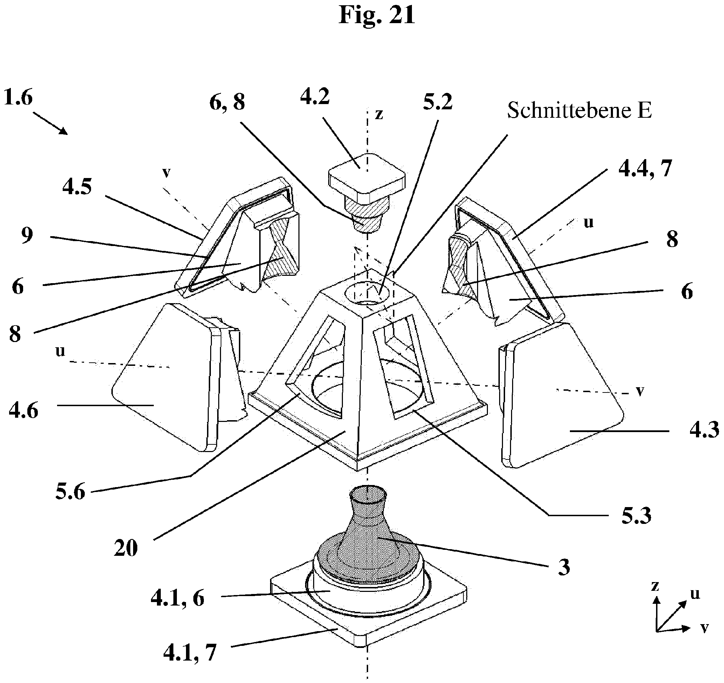

In Fig. 21 bis 23 ist ein mehrteiliges Werkzeug 1.6 nach einem sechsten Ausführungsbeispiel mit einem Dichtungsrahmen 20 in Form eines Pyramidenstumpfes dargestellt.

Fig. 21 zeigt das Werkzeug 1.6 in Explosionsdarstellung mit dem pyramidenstumpfförmigen Dichtungsrahmen 20 mit sechs Rahmenöffnungen 5.1 bis 5.6, einer doppelkegelstumpfförmigen Faser-Preform 3 und sechs verschiedenen Werkzeugteilen 4.1 bis 4.6.

Die Formeinsätze 6 der Werkzeugteile 4.1 bis 4.6. weisen in Teilen gekrümmte, formgebende Funktionsoberflächen 8 entsprechend der Gesamtkontur der vorgeformte Faserpreform 2 bzw. des zu fertigenden Bauteils 13 auf, die in der Fig. 21 schraffiert dargestellt sind.

Im weiteren Unterschied zu den Werkzeugen der vorstehend beschriebenen Ausführungsbeispiele sind die mit dem pyramidenstumpfförmigen Dichtungsrahmen 20 korrespondierenden Werkzeugteile 4.1 bis 4.6. zu einander geneigt angeordnet und werden in Verfahr-Richtungen entlang einer U-, V- und Z-Koordinate bewegt, wobei die Verfahr-Koordinaten U und V nicht rechtwinklig gegenüber der Verfahrkoordinate Z verlaufen.

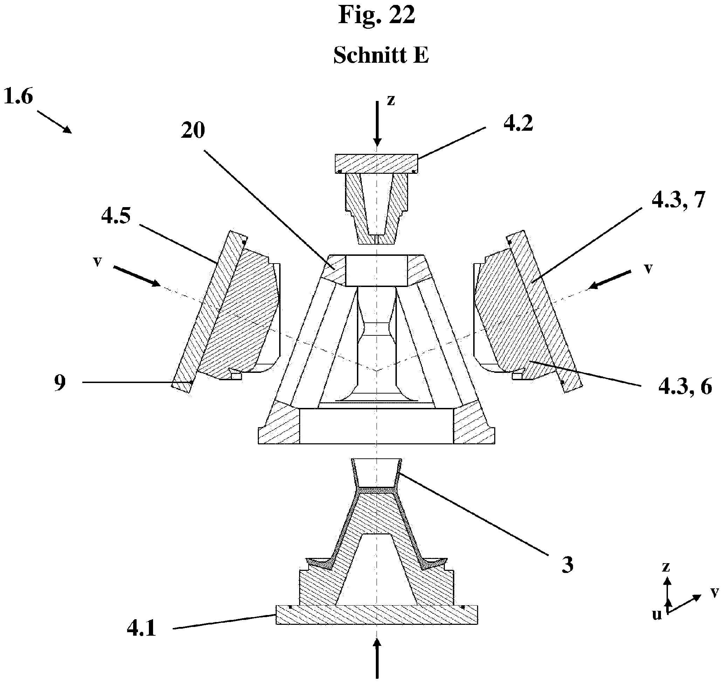

In Fig. 22 ist das mehrteilige Werkzeug 1.6 nach Fig. 21 in einer geöffneten Ausgangsstellung vor der Bestückung des Dichtungsrahmens 20 dargestellt. Zum Verschließen des Werkzeugs 1.6 werden die Werkzeugteile 4.1 bis 4.6. auf den Verfahrwegen entlang der U-, V- und Z-Koordinate auf den Dichtungsrahmen zu bewegt bis die Werkzeugteile 4.1 bis 4.6 in den zugehörigen Rahmenöffnungen 5.1 bis 5.6 platziert sind und gemeinsam die Kavität der doppelkegelstumpfförmigen Faser-Preform 3 geschlossen haben. Die doppelkegelstumpfförmige Faser-Preform 3 wird gleichzeitig mit einem Werkzeugteil 4.1 in den Dichtungsrahmen 20 verbracht.

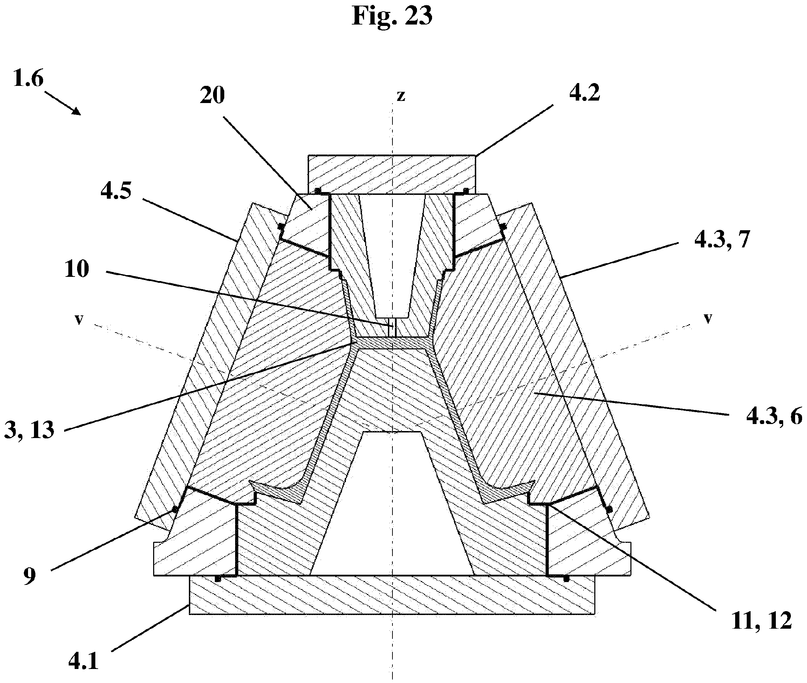

Fig. 23 zeigt das Werkzeug 1.6 nach Fig. 21 im geschlossenen Zustand. Die Werkzeugteile 4.1 bis 4.6 schließen jeder für sich an dem pyramidenstumpfförmigen Dichtungsrahmen 20 an und dichten mittels jeweils einer Dichtungsanordnung zwischen einer Dichtfläche des Dichtungsrahmen 20 und einer mit ihr korrespondierenden Dichtfläche der Grundplatte 7 des Werkzeugteils 4.1 bis 4.6 das Werkzeug 1.6 ab. Damit ist zugleich die Kavität der Faserpreform 3 gegenüber der Umgebung abgedichtet. Die erforderliche Vakuumdichtheit wird durch die in umlaufende Nuten der Dichtflächen der Grundplatten 7 eingelegten, ringförmigen Dichtschnüre 9 unterstützt.

Zur Entformung des Bauteils 13 werden die Werkzeugteile 4.1 bis 4.6 in den entsprechenden Entformungsrichtungen entlang der U-, V- und Z-Koordinate ausgefahren.

Mit diesem Werkzeug 1.6 sind u. a. beispielsweise winklige, in Richtung der U- bzw. V- Koordinate abgespreizte Ausformungen des Bauteils, wie dem in Fig. 22 und 23 ersichtlichen Fußteil, leicht abbildbar und entformbar.

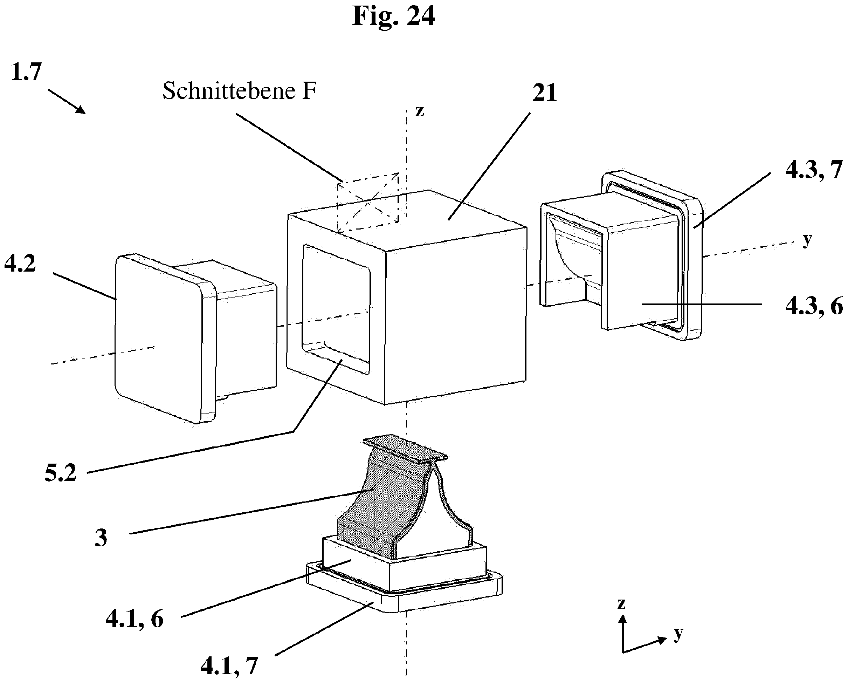

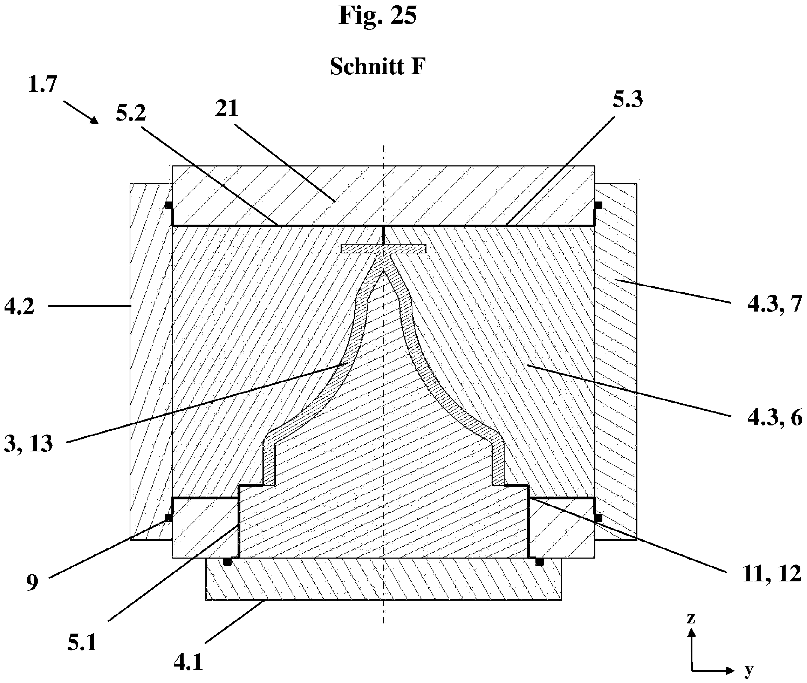

Die Fig. 24 und 25 stellen ein mehrteiliges Werkzeug 1.7 nach einem siebten Ausführungsbeispiel dar. Das Werkzeug 1.7 weist einen würfelförmigen Dichtungsrahmen 21 mit drei Rahmenöffnungen 5.1 bis 5.3 und drei formgebenden Werkzeugteilen 4.1 bis 4.3 auf, welche Verfahr- und Entformungsrichtungen in zwei Koordinaten Z und Y realisieren.

In Fig. 24, die das geöffnete Werkzeug 1.7 in einer Ausgangsstellung zeigt, ist das zu behandelnde Faserhalbzeug 3 in Auflage auf dem Formeinsatz 6 des unteren Werkzeugteils 4.1 ersichtlich, bevor das in der Z-Koordinate agierende untere Werkzeugteil 4.1 und die in Y-Koordinate agierenden Werkzeugteile 4.2 , 4.3 die Rahmenöffnungen 5.1 bis 5.3 dicht verschließen und gemeinsam die Kavität für das Bauteil 13 bilden (vgl. Fig. 25).

In den entsprechenden Verfahr-Koordinaten Y und Z erfolgt nach der Infiltration und Aushärtung des Harzes die Entformung des Bauteils 13. Das Werkzeug 1.7 realisiert die Formung und Entformung von Bauteilen 13 mit hinterschneidenden Ausformungen wie nach Fig. 24, die mit einem herkömmlichen zweiteiligen Formwerkzeug nicht ohne eine Vielzahl aufwändiger Formeinlagen zu bewerkstelligen sind.

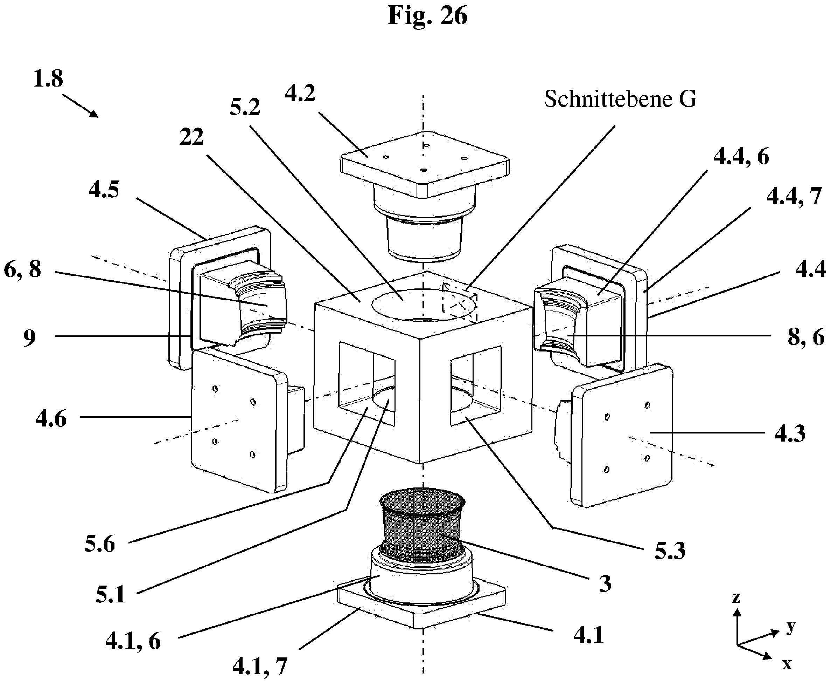

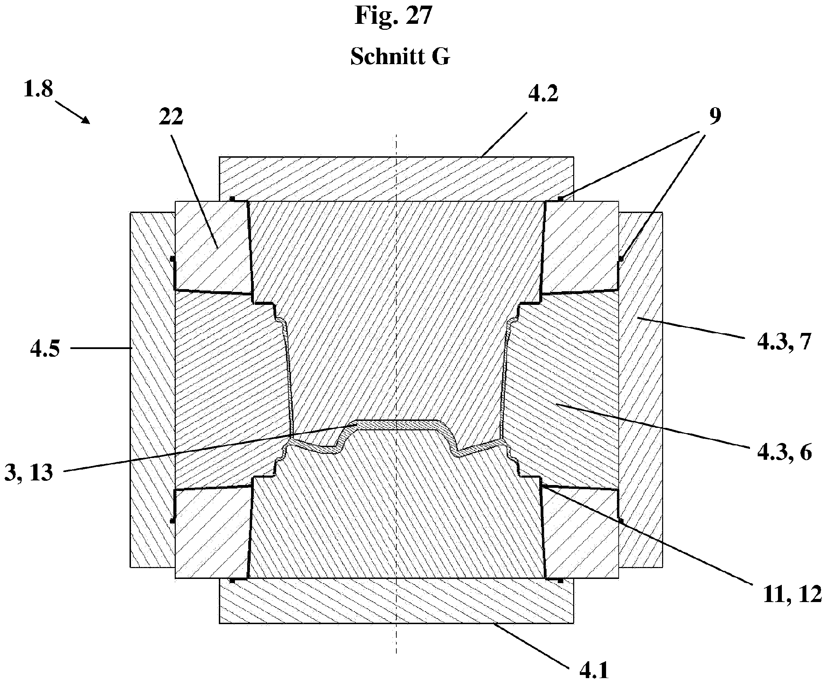

Ein weiteres mehrteiliges Werkzeug 1.8 nach Fig. 26 und 27 besteht aus einem Dichtungsrahmen 22 in Würfelform mit sechs Rahmenöffnungen 5.1 bis 5.6 und sechs Werkzeugteilen 4.1 bis 4.6, wobei die Formeinsätze 6 der Werkzeugteile 4.1 bis 4.6 speziell für die Herstellung eines Bauteils 13 in Radgeometrie, wie z. B. einer Radfelge 13 mit Felgenbett und Radscheibe, ausgebildet sind.

Die Werkzeugteile 4.1 bis 4.6 bestehen aus jeweils einer Grundplatte 7 und einem Formeinsatz 6 mit einer formgebenden Funktionsoberfläche 8. Die formgebenden Funktionsoberflächen 8 der Formeinsätze 6 bilden jeweils einen Teil der Kontur der herzustellenden Radfelge 13 ab. So bilden die formgebenden Funktionsoberflächen 8 der Formeinsätze 6 der vier seitlichen, entlang der X- und Y- Koordinate verfahrbaren Werkzeugteile 4.3 bis 4.6 gemeinsam das Felgenbett ab, während die formgebenden Funktionsoberflächen 8 der Formeinsätze 6 des unteren und oberen, entlang der Z-Koordinate verfahrbaren Werkzeugteils 4.1, 4.2 das Hohlprofil der Radfelge 13 und die Radscheibe abbilden. Für die Aufnahme der großen, im Wesentlichen zylindrisch geformten Formeinsätze 6 des unteren und oberen Werkzeugteils 4.1, 4.2 haben die beiden zugehörigen Rahmenöffnungen 5.1, 5.2 einen entsprechend großen, runden Querschnitt. Wenigstens die untere Rahmenöffnung 5.1 ist zudem ausreichend groß für die Durchführung der Preform 3 der Radfelge ausgebildet.

Fig. 26 zeigt das Werkzeug 1.8 in einem Ausgangszustand vor dem Bestücken und Verschließen des Dichtungsrahmens 22 durch die Werkzeugteile 4.1 bis 4.6.

Zum Bestücken des Dichtungsrahmens 22 ist die Preform 3 der Radfelge auf der formbildenden Funktionsoberfläche 8 des Formeinsatzes 6 des unteren Werkzeugteils 4.1 vorpositioniert und wird mit diesem im Dichtungsrahmen 22 platziert, wobei die Preform 3 die untere Rahmenöffnung 5.1 passiert.

In Fig. 27 ist das Werkzeug 1.8 in einem geschlossenen Zustand dargestellt. Hierin sind die mehrachsig ausgebildeten Hinterschneidungen der komplexen Radgeometrie besonders gut ersichtlich. Diese komplexen Radgeometrie kann mittels der erfindungsgemäßen Vorrichtung mit geringem Aufwand maschinell abgebildet werden, wobei die fertige Radfelge 13 mit Hilfe der sechs Werkzeugteile 4.1 bis 4.6, welche Entformungsrichtungen in drei Koordinaten verwirklichen, ohne Schwierigkeiten geformt und entformt werden kann.

Der Aufbau und die Funktionsweise des gezeigten Werkzeuges 1.8 zur Herstellung der Radfelge entspricht im Weiteren dem Werkzeug 1.1 nach dem ersten Ausführungsbeispiel. Das Werkzeug 1.8 kann aber mit den Merkmalen der Werkzeuge 1.2 bis 1.7 nach den übrigen, vorstehend beschriebenen Ausführungsbeispielen vorteilhaft kombiniert werden.

Diese aus der Beschreibung der Ausführungsbeispiele und den Zeichnungen hervorgehenden Merkmale sind beliebig miteinander kombinierbar, wobei die Kombinationen weitere vorteilhafte Ausführungsformen der Erfindung ergeben.

Die Erfindung ist nicht auf die hier vorgestellten Ausführungsbeispiele begrenzt. Die Erfindung umfasst Werkzeugausführungen mit einer beliebigen Anzahl und Gestalt von Werkzeugteilen, einer beliebigen Form des Dichtungsrahmens und beliebige Entformungsrichtungen der Werkzeugteile entsprechend der qualitativen Anforderungen an die Gestaltung und Herstellung des Bauteils 13 aus Faserverbundwerkstoff.

Mit der erfindungsgemäßen Vorrichtung können FaserverbundBauteile 13 in jeglicher Formgestaltung maschinell abgebildet und serienmäßig hergestellt werden.

### Bezugszeichenliste

- 1: Werkzeug, Form- und Infiltrationswerkzeug, .1 bis .8
- 2: Dichtungsrahmen in Würfelform .1 bis .3
- 3: Faserhalbzeug, Faserpreform
- 4: Werkzeugteile .1 bis .6
- 5: Rahmenöffnung .1 bis .6
- 6: Formeinsatz des Werkzeugteils
- 7: Grundplatte des Werkzeugteils
- 8: formgebende Funktionsoberfläche
- 9: Dichtelement, Dichtschnur, Dichtring
- 10: Injektionsöffnung
- 11: Spaltraum
- 12: Harzkörper
- 13: gefertigtes Bauteil, Radfelge
- 14: Einschnürung des Spaltraumes
- 15: Sollbruchstelle des Harzkörpers
- 16: Dichtungsrahmen mit integriertem Formeinsatz
- 17: Formeinsatz des Dichtungsrahmens
- 18: Dichtungsrahmen für einen Einlage-Formeinsatz
- 19: Einlage-Formeinsatz
- 20: Dichtungsrahmen in Form eines Pyramidenstumpfes
- 21: Dichtungsrahmen in Würfelform mit drei Rahmenöffnungen
- 22: Dichtungsrahmen in Würfelform zur Herstellung eines Bauteils in Radgeometrie

## Patentansprüche

1. Vorrichtung zur Herstellung eines Bauteils aus Faserverbundwerkstoff aus einem Faserhalbzeug mit einem mehrteiligen Form- und Infiltrations-Werkzeug mit Werkzeugteilen, deren formgebende Funktionsoberflächen im geschlossenen Zustand des Werkzeuges eine für das Bauteil maßgebliche Kavität bilden, wobei das Werkzeug (1) einen hohlkörperartig ausgebildeten Dichtungsrahmen (2, 16, 18, 20, 21, 22) aufweist, in welchem das Faserhalbzeug (3) anordenbar ist, und die Werkzeugteile (4) derart ausgebildet und dem einen Dichtungsrahmen (2, 16, 18, 20, 21, 22) zuordenbar sind, dass im geschlossenen Zustand des Werkzeuges (1) die Werkzeugteile (4) dicht mit dem einen Dichtungsrahmen (2, 16, 18, 20, 21, 22) verbunden sind.

2. Vorrichtung nach Anspruch 1, **dadurch gekennzeichnet, dass** wenigstens ein Werkzeugteil (4) in einer am Umfang des Dichtungsrahmens (2, 16, 18, 20, 21, 22) ausgebildeten Rahmenöffnung (5) aufnehmbar ist.

3. Vorrichtung nach Anspruch 2, **dadurch gekennzeichnet, dass** an dem Werkzeugteil (4) eine Dichtfläche ausgebildet ist, die mit einer die Rahmenöffnung (5)umschließenden Dichtfläche des Dichtungsrahmens (2, 16, 18, 20, 21, 22) korrespondiert.

4. Vorrichtung nach Anspruch 3, **dadurch gekennzeichnet, dass** auf der Dichtfläche des Werkzeugteils (4) und/oder der Dichtfläche des Dichtungsrahmens (2, 16, 18, 20, 21, 22) ein umlaufendes Dichtelement (9) angeordnet oder ausgebildet ist.

5. Vorrichtung nach einem der Ansprüche 3 oder 4, **dadurch gekennzeichnet, dass** die Dichtfläche des Werkzeugteils (4) und/oder die Dichtfläche des Dichtungsrahmens (2, 16, 18, 20, 21, 22) eine umlaufende Nut zur Einlage des Dichtelementes (9) aufweist.

6. Vorrichtung nach einem der vorstehenden Ansprüche, **dadurch gekennzeichnet, dass** wenigstens ein Werkzeugteil (4) einen lösbar verbundenen Formeinsatz (6) aufweist, auf dem die formgebende Funktionsoberfläche (8) ausgebildet ist.

7. Vorrichtung nach einem der Ansprüche 2 bis 6, **dadurch gekennzeichnet, dass** wenigstens ein Werkzeugteil (4) eine Grundplatte (7) aufweist, die im geschlossenen Zustand des Werkzeuges (1) eine Rahmenöffnung (5) überdeckt.

8. Vorrichtung nach Anspruch 6 oder 7, **dadurch gekennzeichnet**,-dass im geschlossenen Zustand des Werkzeuges (1) eine Dichtungsanordnung zwischen der Grundplatte (7) wenigstens eines Werkzeugteils (4) und dem Dichtungsrahmen (2, 16, 18, 20, 21, 22) und/oder zwischen dem Formeinsatz (6) wenigstens eines Werkzeugteils (4) und dem Dichtungsrahmen (2) ausgebildet ist.

9. Vorrichtung nach einem der vorstehenden Ansprüche, **dadurch gekennzeichnet, dass** der Dichtungsrahmen (2, 16, 18, 20, 21, 22) und/oder wenigstens ein Werkzeugteil (4) beheizbar ausgebildet sind.

10. Vorrichtung nach einem der vorstehenden Ansprüche, **dadurch gekennzeichnet, dass** wenigstens ein Werkzeugteil (4) mittels eines Führungs- und Antriebsmittels verfahrbar ausgebildet ist.

11. Vorrichtung nach einem der vorstehenden Ansprüche, **dadurch gekennzeichnet, dass** wenigstens eine Seitenwand des Werkzeugteils (4) und/oder wenigstens eine Innenwand der Rahmenöffnung (5) eine Entformungsschräge aufweist.

12. Vorrichtung nach einem der vorstehenden Ansprüche, **dadurch gekennzeichnet, dass** eine formgebende Funktionsoberfläche (8) und/oder die Seitenwände des Werkzeugteils (4) und/oder die Innenwände der Rahmenöffnung (5) poliert und/oder mit einem Trennmittel ausgebildet sind.

13. Vorrichtung nach einem der vorstehenden Ansprüche, **dadurch gekennzeichnet, dass** die Innenwand der Rahmenöffnung (5) und/oder die Seitenwand des Werkzeugteils (4) derart ausgebildet sind, dass ein Spaltraum (11) zwischen benachbart angeordneten Werkzeugteilen (4) und/oder zwischen einer Rahmenöffnung (5) und einem Werkzeugteil (4) eine umlaufende Einschnürung (14) aufweist.

14. Vorrichtung nach Anspruch 13, **dadurch gekennzeichnet, dass** die umlaufende Einschnürung (14) des Spaltraumes (11) eine im Verhältnis zur Spaltbreite des Spaltraumes (11) deutlich geringere Einschnürungsbreite aufweist, wobei vorzugsweise die Spaltbreite im Bereich von 0,1 bis 3,0 mm und die Einschnürungsbreite im Bereich von 0,01 bis 0,5 mm ausgebildet ist.

15. Vorrichtung nach einem der vorstehenden Ansprüche, **dadurch gekennzeichnet, dass** ein Mittel zur Entnahme des Bauteils aus dem Dichtungsrahmen (2, 16, 18, 20, 21, 22) und/oder zum Trennen eines Harzkörpers (12) und/oder zum Abstreifen des Harzkörpers (12) vom Werkzeugteil (4) vorgesehen ist.

16. Vorrichtung nach einem der vorstehenden Ansprüche, **dadurch gekennzeichnet, dass** in dem Dichtungsrahmen (18) ein Einlege-Formeinsatz (19) anordenbar ist.

## Claims

1. Device for producing a component made of fibre composite material from a semi-finished fibre product, having a multi-part moulding and infiltration tool with tool parts, the shaping functional surfaces of which, in the closed state of the tool, form a cavity which is decisive for the component, whereby the tool (1) comprises a hollow-body sealing frame (2, 16, 18, 20, 21, 22) in which the semi-finished fibre product (3) may be arranged, and the tool parts (4) are designed and associated with the sealing frame (2, 16, 18, 20, 21, 22) in such a way that, in the closed state of the tool (1), the tool parts (4) are tightly connected to the sealing frame (2, 16, 18, 20, 21, 22).

2. Device according to claim 1, **characterised in that** at least one tool part (4) may be received by a frame opening (5) formed on the periphery of the sealing frame (2, 16, 18, 20, 21, 22),

3. Device according to claim 2, **characterised in that** a sealing surface is included on the tool part (4) which corresponds to a sealing surface of the sealing frame (2, 16, 18, 20, 21, 22) surrounding the frame opening (5).

4. Device according to claim 3, **characterised in that** a peripheral sealing element (9) is arranged or formed on the sealing surface of the tool part (4) and/or the sealing surface of the sealing frame (2, 16, 18, 20, 21, 22).

5. Device according to one of claims 3 or 4, **characterised in that** the sealing surface of the tool part (4) and/or the sealing surface of the sealing frame (2, 16, 18, 20, 21, 22) has a circumferential groove for the insertion of the sealing element (9).

6. Device according to one of the foregoing claims, **characterised in that** at least one tool part (4) has a removeably connected mould insert (6) on which the functional moulding surface (8) is formed.

7. Device according to one of claims 2 to 6, **characterised in that** at least one tool part (4) has a base plate (7) which, in the closed state of the tool (1), covers a frame opening (5).

8. Device according to claim 6 or 7, **characterised in that** in the closed state of the tool (1), a sealing arrangement is formed between the base plate (7) of at least one tool part (4) and the sealing frame (2, 16, 18, 20, 21, 22) and/or between the mould insert (6) of at least one tool part (4) and the sealing frame (2).

9. Device according to one of the foregoing claims, **characterised in that** the sealing frame (2, 16, 18, 20, 21, 22) and/or at least one tool part (4) are designed to be heatable.

10. Device according to one of the foregoing claims, **characterised in that** at least one tool part (4) is designed to be movable by means of a guide and drive means.

11. Device according to one of the foregoing claims, **characterised in that** at least one side wall of the tool part (4) and/or at least one inner wall of the frame opening (5) has a demoulding taper.

12. Device according to one of the foregoing claims, **characterised in that** a functional moulding surface (8) and/or the side walls of the tool part (4) and/or the inner walls of the frame opening (5) are polished and/or include a release agent.

13. Device according to one of the foregoing claims, **characterised in that** the inner wall of the frame opening (5) and/or the side wall of the tool part (4) are designed such that a gap (11) between adjacently arranged tool parts (4) and/or between a frame opening (5) and a tool part (4) has a peripheral constriction (14).

14. Device according to claim 13, **characterised in that** the peripheral constriction (14) of the gap space (11) has a significantly smaller constriction width in relation to the gap width of the gap space (11), the gap width preferably having a range from 0.1 to 3.0 mm and the constriction width having a range from 0.01 to 0.5 mm.

15. Device according to one of the foregoing claims, **characterised in that** a means is provided for removing the component from the sealing frame (2, 16, 18, 20, 21, 22) and/or for separating a resin body (12) and/or for stripping the resin body (12) from the tool part (4).

16. Device according to one of the foregoing claims, **characterised in that** an insert mould insert (19) can be arranged in the sealing frame (18).

## Revendications

1. Dispositif pour la réalisation d'un élément en matériau composite à base de fibres à partir d'un semi-produit fibreux à l'aide d'un outil de formage et d'infiltration en plusieurs partie avec des parties d'outil dont la surface fonctionnelle de formage constitue une cavité essentielle pour l'élément lorsque l'outil est fermé, l'outil (1) présentant un cadre d'étanchéité en forme de corps creux (2, 16, 18, 20, 21, 22) dans lequel le semi-produit fibreux (3) peut être disposé et les parties d'outil (4) pouvant être formées et disposées en un cadre d'étanchéité (2, 16, 18, 20, 21, 22) de manière à ce que, une fois l'outil (1) fermé, les parties d'outil (4) soient étroitement jointes au cadre d'étanchéité (2, 16, 18, 20, 21, 22).

2. Dispositif selon la revendication 1, **caractérisé en ce que** au moins une partie d'outil (4) soit reçue dans une des ouvertures de cadre (5) formée au bord du cadre d'étanchéité (2, 16, 18, 20, 21, 22).

3. Dispositif selon la revendication 2, **caractérisé en ce que** une surface d'étanchéité formée sur la partie d'outil (4) correspond à une surface d'étanchéité autour de l'ouverture (S) du cadre d'étanchéité (2, 16, 18, 20, 21, 22).

4. Dispositif selon la revendication 3, **caractérisé en ce que** un élément d'étanchéité périphérique (9) est disposé ou formé sur la surface d'étanchéité de la partie d'outil (4) et/ou la surface d'étanchéité du cadre d'étanchéité (2, 16, 18, 20, 21, 22).

5. Dispositif selon l'une des revendications 3 ou 4, **caractérisé en ce que** la surface d'étanchéité de la partie d'outil (4) et/ou la surface d'étanchéité du cadre d'étanchéité (2, 16, 18, 20, 21, 22) présentent une rainure périphérique pour la pose de l'élément d'étanchéité (9).

6. Dispositif selon l'une des revendications précédentes, **caractérisé en ce que** au moins une partie d'outil (4) présente un insert de moule (6) à liaison amovible sur lequel la surface fonctionnelle de formage (8) est constituée.

7. Dispositif selon l'une des revendications 2 à 6, **caractérisé en ce que** au moins une partie d'outil (4) présente une plaque de base (7) recouvrant une ouverture du cadre (5) lorsque l'outil est fermé (1).

8. Disposition selon la revendication 6 ou 7, **caractérisé en ce que** l'outil étant fermé (1), un ensemble d'étanchéité est constitué entre la plaque de base (7) d'au moins une partie d'outil (4) et le cadre d'étanchéité (2, 16, 18, 20, 21, 22) et/ou entre l'insert de formage (6) d'au moins une partie d'outil (4) et le cadre d'étanchéité (2).

9. Dispositif selon l'une des revendications précédentes, **caractérisé en ce que** le cadre d'étanchéité (2, 16, 18, 20, 21, 22) et/ou au moins une partie d'outil (4) peuvent être chauffés.

10. Dispositif selon l'une des revendications précédentes, **caractérisé en ce que** au moins une partie d'outil (4) peut être déplacée à l'aide d'un moyen de guidage et d'entraînement.

11. Dispositif selon l'une de revendications précédentes, **caractérisé en ce que** au moins une paroi latérale de la partie d'outil (4) et/ou au moins une paroi intérieure de l'ouverture du cadre (5) présentent un angle de dépouille.

12. Dispositif selon l'une des revendications précédentes, **caractérisé en ce que** une surface fonctionnelle de formage (8) et/ou les parois latérales de la pièce d'outil (4) et/ou les parois intérieures de l'ouverture de cadre (5) sont polies et/ou dotées d'un moyen de séparation.

13. Dispositif selon l'une des revendications précédentes, **caractérisé en ce que** la paroi interne de l'ouverture de cadre (5) et/ou la paroi latérale de la partie d'outil (4)sont conçues de telle manière qu'un espace (11) entre les parties d'outil adjacentes (4) et/ou entre une ouverture de cadre (5) et une partie d'outil (4) présente un rétrécissement périphérique (14).

14. Dispositif selon la revendication 13, **caractérisé en ce que** le rétrécissement périphérique (14) de l'espace (11) présente une largeur sensiblement inférieure à celle de l'espace (11), la largeur de l'espace étant de l'ordre de 0,1 à 3,0 mm et la largeur du rétrécissement de l'ordre de 0,01 à 0,5 mm.

15. Dispositif selon l'une des revendications précédentes, **caractérisé en ce que** un moyen de prélèvement de la pièce dans le cadre d'étanchéité (2, 16, 18, 20, 21, 22) et/ou de séparation d'un corps en résine (12) et/ou d'enlèvement du corps en résine (12) de ia pièce d'outil (4) est prévu.

16. Dispositif selon l'une des revendications précédentes, **caractérisé en ce que** un insert de formage (19) peut être disposé dans le cadre d'étanchéité (18).
